# EUROPÄISCHE PATENTANMELDUNG

(11) **EP 4 001 379 A1**
(43) Veröffentlichungstag der Anmeldung: **25.05.2022**
(21) Anmeldenummer: 20208567.6
(22) Anmeldetag: 19.11.2020
(51) Int. Cl.: C10B 53/02, C10J 1/20, C10J 1/24, C10L 9/08, C25B 1/04, C25B 15/08

(54) **HYBRIDKRAFTWERK ZUR AUTARKEN ENERGIEVERSORGUNG VON GEBÄUDEN UND INDUSTRIEANLAGEN**

(71) Anmelder: iGas energy GmbH, 52222 Stolberg (DE)
(72) Erfinder: Lentz, Karl-Heinz, 52222 Stolberg (DE)
(74) Vertreter: Meinken, Claudia

(57) **Zusammenfassung**

Gegenstand der Erfindung ist ein Hybridkraftwerk zur autarken Energieversorgung von Gebäuden, insbesondere Wohngebäuden **15** und Industrieanlagen. Das Hybridkraftwerk ist zur lokalen Energieversorgung vorzugsweise in der Nähe der zu versorgenden Gebäude und Industrieanlagen angeordnet. Das Hybridkraftwerk umfasst mindestens eine Anlage zur Erzeugung von Strom aus erneuerbarer Energiequelle und eine Power-to-X Vorrichtung zur thermochemische Umwandlung von Biomasse in andere Energieträger **3.** Zur Überbrückung von Licht- und Dunkelflauten umfasst das Hybridkraftwerk ein oder mehrere Energiespeicher. Die Energieversorgung der Gebäude bzw. Industrieanlagen durch das Hybridkraftwerk ist klima- und CO₂-neutral.

## Beschreibung

Gegenstand der Erfindung ist ein Hybridkraftwerk zur autarken Energieversorgung von Gebäuden, insbesondere Wohngebäuden **15** und Industrieanlagen. Das Hybridkraftwerk ist zur lokalen Energieversorgung vorzugsweise in der Nähe der zu versorgenden Gebäude und Industrieanlagen angeordnet. Das Hybridkraftwerk umfasst mindestens eine Anlage zur Erzeugung von Strom aus erneuerbaren Energiequellen und eine Power-to-X Vorrichtung zur thermochemische Umwandlung von Strom aus erneuerbaren Energiequellen und Biomasse in andere Energieträger. Zur Überbrückung von Licht- und Dunkelflauten umfasst das Hybridkraftwerk ein oder mehrere Energiespeicher. Die Energieversorgung der Gebäude bzw. Industrieanlagen durch das Hybridkraftwerk ist klima- und CO₂-neutral.

Die Energieversorgung soll zukünftig ohne die Nutzung fossiler Energieträger wie beispielsweise Kohle, Erdöl und Erdgas und ohne Kernbrennstoffe wie Uran und Plutonium erfolgen.

Im Wärmesektor beispielsweise wird bisher zur Erzeugung von Wärme vorwiegend der fossile Energieträger Erdgas eingesetzt, beispielsweise zur Erzeugung von industriell benötigter Hochtemperaturwärme. Im Gebäudesektor und der Warmwasserbereitstellung werden zur Erzeugung von Niedertemperaturwärme beispielsweise Wärmepumpen **11** eingesetzt, die Erdgas oder Strom betrieben sein können.

In Zukunft soll die Energieversorgung ausschließlich durch elektrischen Strom aus erneuerbaren Energiequellen wie Sonnenenergie (= Solarenergie, elektromagnetische Strahlungsenergie), Windenergie (= Windkraft, kinetische Energie der Luftbewegung), Wasserkraft, Biomasse (chemische Energie) und Geothermie erfolgen. Elektrischer Strom (nachfolgend Strom) aus erneuerbaren Energiequellen wird in Zukunft zum primären Energieträger. Alle Sektoren, deren Wertschöpfung bislang auf der Nutzung fossiler Energieträger beruht, werden einem Transformationsprozess unterliegen, bei dem der immer stärkerwerdende Einsatz von Strom aus erneuerbaren Energiequellen die zentrale Schlüsselstellung einnimmt, beispielsweise im Mobilitätssektor der Antrieb von Fahrzeugen über Batterie **8** mittels Strom aus erneuerbaren Energiequellen und Brennstoffzellen-Antrieb von Fahrzeugen mit Wasserstoff, wobei der Wasserstoff durch die Elektrolyse von Wasser hergestellt wird und der Elektrolyseur **10** mit Strom aus erneuerbaren Energiequellen betrieben wird.

Das Konzept der Sektorenkopplung (= Sektorkopplung) verbindet den Sektor Strom aus erneuerbaren Energiequellen mit anderen Sektoren die Energie verbrauchen und die bisher ihre Energieversorgung ganz oder teilweise aus fossilen Energieträgern gedeckt haben, beispielsweise den Mobilitätssektor und den Wärmesektor. Dabei verbinden (= koppeln) Power-to-X Technologien die einzelnen Sektoren miteinander. Die Sektorenkopplung wird als Schlüsselkonzept bei der Energiewende und dem Aufbau einer Energieversorgung, die vollständig auf der Erzeugung von Energie aus erneuerbaren Energiequellen beruht, angesehen. Grundsätzlich zielt das Konzept der Sektorenkopplung auf die direkte und indirekte Elektrifizierung von bisher fossil betriebenen Anwendungen. Bei der direkten Elektrifizierung wird die bisherige Anwendungstechnologie durch Strom aus erneuerbaren Energiequellen ersetzt, z.B. Gasheizung durch Wärmepumpe **11,** die mit Strom aus erneuerbaren Energiequellen betrieben wird, Fahrzeuge mit Verbrennungsmotor durch E-Autos. Bei der indirekten Elektrifizierung wird Strom aus erneuerbaren Energiequellen in einen anderen Energieträger umgewandelt, der dann statt des bisher verwendeten fossilen Energieträgers genutzt wird, wobei ggf. die Anwendungstechnologie an die indirekte Elektrifizierung d.h. den neuen Energieträger angepasst werden muss.

Mit Power-to-X (abgekürzt "PtX") Technologien kann Strom aus erneuerbaren Energiequellen in andere Energieträger umgewandelt werden. Mit Power-to-Heat ("PtH") Technologien wird Strom aus erneuerbaren Energiequellen in Wärme umgewandelt. In vielen Fällen werden bei der Umwandlung von Strom aus erneuerbaren Energiequellen in andere Energieträger unter Anwendung von Power-to-X Technologien Grundstoffe eingesetzt, die in Energieträger umgewandelt werden. Mit Power-to-Gas ("PtG") Technologien beispielsweise werden geeignete Grundstoffe und Strom aus erneuerbaren Energiequellen in gasförmige Produkte als Energieträger umgewandelt, beispielsweise in die Energieträger Wasserstoff oder Methan. Mit Power-to-Liquid ("PtL") Technologien werden geeignete Grundstoffe und Strom aus erneuerbaren Energiequellen in flüssige Energieträger wie Dieselkraftstoff oder Kerosin umgewandelt. Mit Power-to-Chemicals ("PtC") Technologien werden geeignete Grundstoffe und Strom aus erneuerbaren Energiequellen in Chemikalien wie Methanol (CH₃OH) oder Ammoniak (NH₃) umgewandelt. Für die Anwendung der PtX Technologien werden zudem geeignete PtX Vorrichtungen benötigt.

PtX Technologien wenden häufig elektrolytische Verfahren an, beispielsweise die Elektrolyse von Wasser um Strom aus erneuerbaren Energiequellen in Wasserstoff als Energieträger umzuwandeln. Dabei wird Wasser als Grundstoff eingesetzt. Elektrolyseure **10** werden als PtX Vorrichtung eingesetzt. Bei der Elektrolyse wird Wasser unter Zuführung von Strom aus erneuerbaren Energiequellen in dem Elektrolyseur **10** in Wasserstoff (H₂) und Sauerstoff (O₂) gespalten. Eine PtX Vorrichtung zur Umwandlung von Strom aus erneuerbaren Energiequellen in Wärme ist beispielsweise eine elektrisch beriebene Wärmepumpe **11.**

Die Problematik der schwankenden und nicht vorhersehbaren Verfügbarkeit von erneuerbaren Energiequellen wie Sonne und Wind und die dadurch bedingte schwankende Verfügbarkeit von Strom aus erneuerbaren Energiequellen, kann durch Sektorenkopplung verringert werden. Strom aus erneuerbaren Energiequellen muss dann erzeugt werden, wenn die erneuerbare Energiequelle verfügbar ist und dann ggf. gespeichert werden, bis die Energie benötigt wird. Ohne Sektorenkopplung wären große Kapazitäten an teuren Stromspeichern notwendig, um in Zeiten mit geringer Verfügbarkeit von erneuerbaren Energiequellen den Bedarf durch gespeicherten Strom aus erneuerbaren Energiequellen zu ergänzen. Die Sektorenkopplung kompensiert den Mangel an Flexibilität bei der Erzeugung von Strom aus erneuerbaren Energiequellen dadurch, dass die in verschiedenen Sektoren verfügbaren Energieträger flexibel gekoppelt werden, um Schwankungen in der Verfügbarkeit von erneuerbaren Energiequellen auszugleichen. Die Koppelung der Energieträger in einzelnen Sektoren, wirken wie ein delokalisierter Stromspeicher in dem Schwankungen in der Verfügbarkeit von Strom aus erneuerbaren Energiequellen zur Versorgung eines Sektors durch Energieträger aus anderen Sektoren gedämpft und ausgeglichen werden kann.

Fossile Energieträger wie Erdölfraktionen, Erdgas, und in geringem Umfang Kohle und Biomasse werden zudem im Chemiesektor als Kohlenstoff-liefernde Grundstoffe verwendet. Um die Klimaschutzziele und eine CO₂-Neutralität zu erreichen, müssen in Zukunft als Kohlenstoff-liefernde Grundstoffe Biomasse, CO₂ und Recyclate aus der Kreislaufwirtschaft organischer Materialien zur Herstellung von Kohlenstoff-haltigen Materialien, Kohlenstoff-haltigen Chemikalien und Kohlenstoff-haltigen Kraftstoffen eingesetzt werden, und die fossilen Energieträger vollständig ersetzten.

Die aktuellen Entwicklungen zielen auf die flächendeckende Implementierung der Verwendung von Strom aus erneuerbaren Energiequellen, d.h. unter anderem die flächendeckende Bereitstellung von Strom aus erneuerbaren Energiequellen, die flächendeckende Bereitstellung von Produkten und Technologien zur Speicherung, Umwandlung und Verteilung des Stroms aus erneuerbaren Energiequellen, die flächendeckende Bereitstellung von PtX Vorrichtungen zur Kopplung der Sektoren, die flächendeckende Bereitstellung von Energieträger-spezifischer Versorgungsinfrastruktur und Logistik. An der Implementierung sind deshalb viele unterschiedliche Unternehmen aus unterschiedlichen Branchen beteiligt. Rechtliche, politische und gesellschaftliche Problematiken bedürfen einer Klärung. Aufgrund der Vielzahl der erforderlichen Maßnahmen und deren Koordination ist eine flächendeckende Implementierung komplex, mit großem zeitlichem Vorlauf und hohen Investitionskosten verbunden. Die Umsetzung ist dadurch erheblich erschwert und zeitlich verzögert. In welchem Umfang zu einem definierten Zeitpunkt das Ziel oder ein festgelegtes Zwischenziel erreicht ist die Energieversorgung ohne Einsatz fossiler Energieträger oder Kernbrennstoffe zu decken, ist nicht unmittelbar offensichtlich.

Eine Aufgabe der vorliegenden Erfindung ist es, das Ziel die Energieversorgung ohne fossile Energieträger zu decken, einfach, schnell, messbar und ohne hohe Investitionskosten umzusetzen.

Diese Aufgabe wird durch die Erfindung gelöst. Gegenstand der Erfindung ist ein Hybridkraftwerk umfassend mindestens eine Anlage zur Erzeugung von Strom aus erneuerbaren Energiequellen und eine Power-to-X Vorrichtung zur thermochemischen Umwandlung von Strom aus erneuerbaren Energiequellen und Biomasse in andere Energieträger. Das Hybridkraftwerk versorgt die geographische Einheit, insbesondere Gebäude wie Wohngebäude **15** und Industrieanlagen CO₂-neutral (klimaneutral) mit Energie. Das erfindungsgemäße Hybridkraftwerk ermöglicht die Selbstversorgung geographischer Einheiten mit Energie, wobei keine fossilen Energieträger und keine Kernbrennstoffe zu Energieversorgung verwendet werden. Die geographische Einheit wird durch das Hybridkraftwerk energieautark. Die Power-to-X Vorrichtung wandelt Biomasse thermochemisch in andere Energieträger um. Die für die thermochemische Umwandlung notwendige Energie liefert der Strom aus erneuerbarer Energiequelle, der mit der Anlage zur Erzeugung von Strom aus erneuerbarer Energiequelle erzeugt wird, die Bestandteil des Hybridkraftwerks ist.

Gegenstand der Erfindung ist ein Hybridkraftwerk zur autarken Energieversorgung einer geographischen Einheit beispielsweise Gebäude oder Industrieanlage umfassend
eine Anlage zur Erzeugung von Strom aus erneuerbarer Energiequelle,
eine Power-to-X Vorrichtung zur thermochemischen Umwandlung von Biomasse in andere Energieträger **3,**
einen oder mehrere Energiespeicher.

Zur thermochemischen Umwandlung der Biomasse in der Power-to-X Vorrichtung wird der aus erneuerbarer Energiequelle erzeugte Strom direkt verwendet, beispielsweise, wenn gerade besonders viel Strom aus erneuerbarer Energiequelle erzeugt und gleichzeitig wenig Strom zur Energieversorgung der geographischen Einheit benötigt wird, also ein Überschuss an Strom aus erneuerbarer Energiequelle im Hybridkraftwerk erzeugt wird. Zur thermochemischen Umwandlung der Biomasse in der Power-to-X Vorrichtung kann der aus erneuerbarer Energiequelle erzeugte Strom auch indirekt verwendet werden, beispielsweise wenn gerade besonders viel Biomasse und besonders viel gespeicherte Energieträger im Hybridkraftwerk vorhanden sind oder gerade besonders viel Biomasse und wenig oder kein Strom aus erneuerbarer Energiequelle im Hybridkraftwerk erzeugt wird. Bei der indirekten Verwendung des Stroms aus erneuerbarer Energiequelle wird gespeicherter Energieträger, der zuvor im Hybridkraftwerk aus Strom aus erneuerbarer Energiequelle erzeugt wurde, zurückverstromt und zum Betrieb der Power-to-X Vorrichtung zur thermochemischen Umwandlung von Biomasse eingesetzt. Gegenstand der Erfindung ist ein Hybridkraftwerk zur autarken Energieversorgung einer geographischen Einheit beispielsweise Gebäude oder Industrieanlage umfassend eine Anlage zur Erzeugung von Strom aus erneuerbarer Energiequelle, eine Power-to-X Vorrichtung zur thermochemischen Umwandlung Biomasse und Strom aus erneuerbarer Energiequelle in andere Energieträger, einen oder mehrere Energiespeicher.

Gegenstand der Erfindung ist eine energieautarke Einheit umfassend das erfindungsgemäße Hybridkraftwerk und eine geographische Einheit.

Mit der Anlage zur Erzeugung von Strom aus erneuerbarer Energiequelle wird Strom erzeugt, wenn die betreffende Energiequelle, vorzugsweise Solarenergie oder Windenergie, verfügbar ist. Ein Teil des erzeugten Stroms wird direkt zur Energieversorgung der geographischen Einheit verwendet. Der verbleibende Teil des erzeugten Stroms (= überschüssiger Strom, der zu diesem Zeitpunkt zur Energieversorgung der geographischen Einheit nicht benötigt wird) wird im Hybridkraftwerk in andere Energieträger umgewandelt. Ein Überschuss an Strom kann zum Betrieb des Hybridkraftwerks verwendet werden. Der Betrieb des Hybridkraftwerks kann auch durch andere Energieträger erfolgen, in die überschüssiger Strom aus erneuerbarer Energiequelle umgewandelt wurde. Überschüssiger Strom und die aus überschüssigem Strom erzeugten anderen Energieträger können im Hybridkraftwerk gespeichert werden. Das Hybridkraftwerk umfasst entsprechende Energiespeicher. Andere Energieträger in die überschüssiger Strom umgewandelt wurde, können die geographische Einheit bzw. die energieautarke Einheit ebenfalls mit Energie versorgen. Zur Energieversorgung der geographischen Einheit bzw. der energieautarken Einheit wird ausschließlich Biomasse als Energieträger zugeführt.

"Andere Energieträger" sind erfindungsgemäß alle Energieträger mit Ausnahme von fossilen Brennstoffen und Kernbrennstoffen. "Andere Energieträger" sind erfindungsgemäß alle Energieträger, in die Strom aus erneuerbarer Energiequelle umgewandelt werden kann, beispielsweise Wärme. "Andere Energieträger" sind erfindungsgemäß auch Energieträger in die geeignete Grundstoffe in Power-to-X Vorrichtungen umgewandelt werden, wobei die Power-to-X Vorrichtungen mit Strom aus erneuerbarer Energiequelle (direkt oder indirekt) betrieben werden. "Andere Energieträger" sind beispielsweise Wärme, gasförmige Energieträger wie Synthesegas, Wasserstoff oder Methan.

Mit dem erfindungsgemäßen Hybridkraftwerk kann die Energieversorgung einer geographischen Einheit zu jeder Tages-, Nacht- und Jahreszeit gedeckt werden, unabhängig davon, ob zu der betreffenden Tages-, Nacht- oder Jahreszeit ausreichend Strom aus erneuerbarer Energiequelle zur Energieversorgung der geographischen Einheit erzeugt werden kann. Die gesamte Energieversorgung der geographischen Einheit wird zu jeder Tages-, Nacht- und Jahreszeit ausschließlich durch Strom aus erneuerbarer Energiequelle und der thermochemischen Umsetzung von Biomasse in andere Energieträger gedeckt.

Die vorliegende Erfindung stellt ein Hybridkraftwerk bereit, dass geographische Einheiten ohne Einsatz fossiler Energieträger zu jeder Tages-, Nacht- und Jahreszeit bedarfsgerecht mit Energie versorgt. Das erfindungsgemäße Hybridkraftwerk ist ein Energieerzeuger und ein delokalisierter Energiespeicher. Das erfindungsgemäße Hybridkraftwerk ermöglicht Insellösungen zur Energieversorgung geographischer Einheiten ohne Einsatz fossiler Energieträger. Die geographische Einheit, die mit dem erfindungsgemäßen Hybridkraftwerk autark mit Energie versorgt wird bzw. die Bestandteil der erfindungsgemäßen energieautarken Einheit ist, kann unterschiedlich groß sein, beispielsweise kann die geographische Einheit ein Wohngebäude 15 oder eine Stadt sein. Dadurch ist eine schnelle Implementierung der Energiewende und Erreichung der Klimaschutzziele möglich. Das erreichte Ziel der Klimaneutralität einzelner geographischer Einheiten ist unmittelbar sichtbar und messbar. Der Aufbau flächendeckender Energieträger-spezifischer Transport-, Speicher- und Logistikinfrastruktur ist nicht erforderlich und stellt deshalb keinen limitierenden Faktor dar, weil bestehende geographische Einheiten mit dem Hybridkraftwerk energieautarke Einheiten bilden. Die geographischen Einheiten können unabhängig voneinander energieautark ausgebaut werden, indem ein erfindungsgemäßes Hybridkraftwerk zur geographischen Einheit hinzugefügt wird. Aus diesem Grund entfällt auch weitgehend die zeitverzögernde Klärung rechtlicher, politischer und gesellschaftlicher Themen, die dem Aufbau flächendeckender Infrastruktur entgegenstehen. Im nächsten Schritt können einzelne energieautarke Einheiten gekoppelt werden und so zu einem flächendeckenden Netz CO₂-neutraler Energieversorgung beitragen.

Das erfindungsgemäße Hybridkraftwerk kombiniert zur autarken Energieversorgung einer geographischen Einheit Anlagen zur Erzeugung des Energieträgers Strom aus erneuerbaren Energiequellen mit Power-to-X Vorrichtungen zur Erzeugung von anderen Energieträgern. Das erfindungsgemäße Hybridkraftwerk kombiniert zur autarken Energieversorgung einer geographischen Einheit Anlagen zur Erzeugung des Energieträgers Strom aus erneuerbarer Energiequelle mit Power-to-X Vorrichtungen wie Power-to-Heat Vorrichtungen zur Erzeugung von Wärme als Energieträger, beispielsweise Wärmepumpen **11** zur Umwandlung von Strom aus erneuerbarer Energiequelle in Wärme. Das erfindungsgemäße Hybridkraftwerk kombiniert zur autarken Energieversorgung geographischer Einheiten Anlagen zur Erzeugung von Strom aus erneuerbarer Energiequelle mit Power-to-X Vorrichtungen zur Erzeugung von anderen Energieträgern durch thermochemische Umwandlung von Biomasse. Aus Biomasse können mit Power-to-X Vorrichtungen durch thermochemische Umwandlung unterschiedliche Energieträger hergestellt werden. Entsprechende thermochemische Vorrichtungen und thermochemische Verfahren zur Umwandlung von Biomasse in andere Energieträger, die als Power-to-X Vorrichtung bzw. Technologie geeignet sind, sind dem Fachmann bekannt, beispielsweise Biogasanlagen zur Umwandlung von Biomasse in Biogas. In besonders bevorzugten Ausführungsformen des Hybridkraftwerks ist die Power-to-X Vorrichtung zur thermochemischen Umwandlung von Biomasse eine Power-to-Gas Vorrichtung, die Biomasse in Synthesegas, beispielsweise Biogas umwandelt.

Das Hybridkraftwerk umfasst eine Power-to-X Vorrichtung zur thermochemischen Umwandlung von Biomasse in andere Energieträger **3** beispielsweise ausgewählt aus Vorrichtungen zur Verbrennung von Biomasse, Vorrichtungen zur Pyrolyse von Biomasse, Biogasanlagen.

In besonders bevorzugten Ausführungsformen umfasst das Hybridkraftwerk eine Power-to-X Vorrichtung zur thermochemischen Umwandlung von Biomasse in andere Energieträger **3** ausgewählt aus Vorrichtungen zur hydrothermalen Umwandlung von Biomasse, beispielsweise ausgewählt aus Vorrichtungen zur hydrothermalen Carbonisierung von Biomasse, Vorrichtungen zur hydrothermalen Verflüssigung von Biomasse, Vorrichtungen zur hydrothermalen Vergasung von Biomasse, Vorrichtungen zur unterkritischen hydrothermalen Vergasung von Biomasse, Vorrichtungen zur nahkritischen hydrothermalen Vergasung von Biomasse, Vorrichtungen zur überkritischen hydrothermalen Vergasung von Biomasse, Vorrichtungen zur überkritischen hydrothermalen Vergasung von Biomasse unter Sauerstoffausschluss. Mit Power-to-X Vorrichtungen zur thermochemischen Umwandlung von Biomasse in andere Energieträger **3** wird Biomasse unter erhöhter Temperatur und erhöhtem Druck in Wasser umgewandelt. Das Wasser ist dabei als Reaktions- und Lösungsmittel und als Reaktant und Katalysator an der hydrothermalen Umwandlung der Biomasse beteiligt. Die verschiedenen hydrothermalen Verfahren unterscheiden sich dabei hinsichtlich des Drucks und der Temperatur, so dass Biomasse hydrothermal karbonisiert, verflüssigt oder vergast wird. Bei der hydrothermalen Carbonisierung von Biomasse in einer Power-to-X Vorrichtung zur hydrothermalen Carbonisierung wird Biomasse beispielsweise in Kohleschlamm bzw. kohleartigen Feststoff als Energieträger umgewandelt. Bei der hydrothermalen Verflüssigung von Biomasse in einer Power-to-X Vorrichtung zur hydrothermalen Verflüssigung wird Biomasse beispielsweise in einen hochviskosen Teer als Energieträger umgewandelt. Der hochviskose Teer kann beispielsweise als Brennstoff oder als Kohlenstoff-liefernder Grundstoff zur Herstellung von Kohlenstoff-haltigen Materialien, Kohlenstoff-haltigen Chemikalien und Kohlenstoff-haltigen Kraftstoffen eingesetzt werden. Bei der hydrothermalen Vergasung von Biomasse ist die Power-to-X Vorrichtung eine Power-to-Gas Vorrichtung. Bei der hydrothermalen Vergasung von Biomasse in einer Power-to-Gas Vorrichtung zur hydrothermalen Vergasung wird Biomasse beispielsweise in Synthesegas als Energieträger umgewandelt. Das Synthesegas hat abhängig von Faktoren wie Druck, Temperatur, An- oder Abwesenheit von Katalysatoren, ggf. Art des bzw. der Katalysatoren, Strömungsgeschwindigkeit, den baulichen Details der Power-to-Gas Vorrichtung, Einbauten und Anordnung der Einbauten in der Power-to-Gas Vorrichtung, Zusammensetzung der Biomasse eine unterschiedliche Zusammensetzung. Bei der unterkritischen hydrothermalen Vergasung von Biomasse in einer Power-to-Gas Vorrichtung zur unterkritischen hydrothermalen Vergasung wird Biomasse in Gegenwart von Edelmetallkatalysatoren beispielsweise in Synthesegas umgewandelt, das vorzugsweise Wasserstoff umfasst. Bei der nahekritischen hydrothermalen Vergasung von Biomasse in einer Power-to-Gas Vorrichtung zur nahekritischen hydrothermalen Vergasung wird Biomasse in Gegenwart von Katalysatoren beispielsweise in Synthesegas umgewandelt, das vorzugsweise Methan umfasst. Bei der überkritischen hydrothermalen Vergasung von Biomasse in einer Power-to-Gas Vorrichtung zur überkritischen hydrothermalen Vergasung wird Biomasse beispielsweise in Synthesegas umgewandelt, das überwiegend Wasserstoff, Methan und Kohlenstoff umfasst.

In bevorzugten Ausführungsformen umfasst das Hybridkraftwerk als Power-to-X Vorrichtung zur thermochemischen Umwandlung von Biomasse in andere Energieträger **3** eine Power-to-Gas Vorrichtung zur überkritischen hydrothermalen Vergasung von Biomasse, beispielsweise einen Reaktor zur überkritischen hydrothermalen Vergasung von Biomasse in überkritischem Wasser unter Sauerstoffausschluss.

Gegenstand der Erfindung ist ein Hybridkraftwerk zur autarken Energieversorgung einer geographischen Einheit beispielsweise Gebäude oder Industrieanlage umfassend
eine Anlage zur Erzeugung von Strom aus erneuerbarer Energiequelle,
eine Power-to-X Vorrichtung zur thermochemischen Umwandlung von Biomasse in andere Energieträger **3,** wobei die Power-to-X Vorrichtung eine Power-to-Gas Vorrichtung, vorzugsweise ein Reaktor zur überkritischen hydrothermalen Vergasung von Biomasse in überkritischem Wasser unter Sauerstoffausschluss ist,
einen oder mehrere Energiespeicher.

Geeignete Power-to-Gas Vorrichtungen sind beispielsweise Reaktoren zur überkritischen hydrothermalen Vergasung von Biomasse in überkritischem Wasser unter Sauerstoffausschluss wie sie in WO 2019/020209 (PCT/EP2018/000355) und EP20186443.6 beschrieben sind. In besonders bevorzugten Ausführungsformen umfasst das Hybridkraftwerk einen Reaktor zur überkritischen hydrothermalen Vergasung von Biomasse in überkritischem Wasser unter Sauerstoffausschluss, beispielsweise einen in PCT/EP2018/000355 oder EP20186443.6 beschriebenen Reaktor. Die für die Kompression und Erwärmung der Biomasse bzw. die Erzeugung von überkritischem Wasser notwendige Energie liefert die Anlage zur Erzeugung von Strom aus erneuerbarer Energiequelle, direkt oder indirekt. Ein entsprechender Reaktor wird im Hybridkraftwerk direkt oder indirekt mit Strom aus erneuerbarer Energiequelle betrieben und wandelt Biomasse in Synthesegas um. In besonders bevorzugten Ausführungsformen des Hybridkraftwerks ist der Reaktor zur überkritischen hydrothermalen Vergasung von Biomasse in überkritischem Wasser unter Sauerstoffausschluss beispielsweise ein in PCT/EP2018/000355 oder EP20186443.6 beschriebener Reaktor über eine Leitung für Strom **17** mit der Anlage zur Erzeugung von Strom aus erneuerbarer Energiequelle verbunden und wird mit Strom aus erneuerbarer Energiequelle mit Energie versorgt. In besonders bevorzugten Ausführungsformen des Hybridkraftwerks ist der Reaktor zur überkritischen hydrothermalen Vergasung von Biomasse in überkritischem Wasser unter Sauerstoffausschluss, beispielsweise ein in PCT/EP2018/000355 oder EP20186443.6 beschriebener Reaktor über eine Leitung für Strom **17** mit einer Anlage zur Rückverstromung beispielsweise Turbine **13** und / oder Brennstoffzelle **14** verbunden und wird indirekt mit Strom aus erneuerbarer Energiequelle mit Energie versorgt.

Gegenstand der Erfindung ist ein Hybridkraftwerk zur autarken Energieversorgung einer geographischen Einheit beispielsweise Gebäude oder Industrieanlage umfassend
eine Anlage zur Erzeugung von Strom aus erneuerbarer Energiequelle,
eine Power-to-X Vorrichtung zur thermochemischen Umwandlung von Biomasse in andere Energieträger **3,** wobei die Power-to-X Vorrichtung eine Power-to-Gas Vorrichtung ist, wobei die Power-to-Gas Vorrichtung ein Reaktor ist, der zur überkritischen hydrothermalen Vergasung von Biomasse in überkritischem Wasser unter Sauerstoffausschluss geeignet ist, vorzugsweise ein Reaktor, der in PCT/EP2018/000355 beschrieben ist, besonders bevorzugt ein Reaktor, der in EP20186443.6 beschrieben ist,
vorzugsweise eine Gasaufbereitungsanlage **4,**
einen oder mehrere Energiespeicher.

In besonders bevorzugten Ausführungsformen der Erfindung umfasst das Hybridkraftwerk zur autarken Energieversorgung einer geographischen Einheit
eine Anlage zur Erzeugung von Strom aus erneuerbarer Energiequelle,
eine Power-to-X Vorrichtung zur thermochemischen Umwandlung von Biomasse in andere Energieträger **3,** wobei die Power-to-X Vorrichtung eine Power-to-Gas Vorrichtung ist, wobei die Power-to-Gas Vorrichtung ein Reaktor zur überkritischen hydrothermalen Vergasung von auf 25 bis 35 MPa komprimierter Biomasse in überkritischem Wasser unter Sauerstoffausschluss ist,
eine Gasaufbereitungsanlage **4,**
einen oder mehrere Energiespeicher,
und wobei der Reaktor eine druckdicht abschließbare innere Hülle umfasst,
der Reaktor in der inneren Hülle einen Abscheidebereich umfasst, der einen Wärmetauscher und einen Abscheider umfasst, zur Erwärmung von komprimierter Biomasse auf bis zu 550 Grad Celsius und zur Abtrennung von Wertstoffen aus der komprimierten Biomasse,
der Reaktor in der inneren Hülle einen Aufheizbereich umfasst zur Erwärmung von komprimierter Biomasse nach der Abtrennung von Wertstoffen auf 600 bis 700 Grad Celsius,
der Reaktor in der inneren Hülle einen Verweilbereich umfasst zur überkritischen hydrothermalen Vergasung von komprimierter Biomasse nach dem Aufheizen auf 600 bis 700 Grad Celsius.

Im erfindungsgemäßen Hybridkraftwerk kann mit der Power-to-X Vorrichtung zur thermochemischen Umwandlung von Biomasse in andere Energieträger **3** beispielsweise der Power-to-Gas Vorrichtung vorzugsweise dem Reaktor zur überkritischen hydrothermalen Vergasung von Biomasse in überkritischem Wasser unter Sauerstoffausschluss Biomasse in andere Energieträger umgewandelt werden. Dabei kann die Umwandlung der Biomasse beispielsweise kontinuierlich oder bedarfsangepasst erfolgen. Bei der thermochemischen, insbesondere der hydrothermalen Umwandlung von Biomasse wird Biomasse vorzugsweise in Wärme und Synthesegas umgewandelt. Dabei ist das bei der thermochemischen Umwandlung, insbesondere der hydrothermalen Umwandlung von Biomasse erzeugte Synthesegas in der Regel ein Gasgemisch, das unterschiedliche Gase und unterschiedliche Mengen der jeweiligen Gase enthalten kann. Die Zusammensetzung von Synthesegas ist abhängig von den jeweiligen Reaktionsbedingungen der thermochemischen bzw. hydrothermalen Umwandlung und kann in weiten Grenzen variieren. Die Reaktionsbedingungen der thermochemischen bzw. hydrothermalen Umwandlung wie beispielsweise Druck, Temperatur, Verweilzeit, Form und Anordnung der Reaktionsräume in der Power-to-X Vorrichtung zur thermochemischen Umwandlung von Biomasse in andere Energieträger **3** beispielsweise dem Reaktor, ggf. verwendete Katalysatoren, ggf. der Ausschluss von Sauerstoff und die Zusammensetzung der Biomasse sowie weitere Faktoren haben Einfluss auf die Zusammensetzung von erzeugtem Synthesegas. Abhängig von dem jeweiligen Bedarf und den jeweiligen Gegebenheiten, kann für jede einzelne geographische Einheit ein geeignetes Hybridkraftwerk bzw. eine für diese geographische Einheit geeignete Power-to- X Vorrichtung zur thermochemischen Umwandlung von Biomasse in andere Energieträger **3** ausgewählt werden.

In besonders bevorzugten Ausführungsformen umfasst das Hybridkraftwerk eine Power-to-X Vorrichtung zur thermochemischen Umwandlung von Biomasse in andere Energieträger **3,** vorzugsweise eine Power-to-Gas Vorrichtung, wobei die Biomasse als geeigneter Grundstoff verwendet wird, die in der jeweiligen geographischen Einheit vorhanden ist, beispielsweise organische Abfälle wie Biomüll und Klärschlamm, die in der geographischen Einheit beispielsweise durch die Bewohner eines Wohngebäudes **15** oder Mitarbeiter einer Industrieanlage erzeugt werden. Dadurch wird Biomasse, die in der geographischen Einheit nicht mehr benötigt wird, in dem erfindungsgemäßen Hybridkraftwerk in einen oder mehrere andere Energieträger überführt, die beispielsweise zur Energieversorgung der geographischen Einheit verwendet werden können, wenn mit der Anlage zur Erzeugung von Strom aus erneuerbarer Energiequelle kein oder nicht ausreichend Strom erzeugt werden kann, um die geographische Einheit bzw. die energieautarke Einheit autark mit Energie zu versorgen. Das erfindungsgemäße Hybridkraftwerk setzt das Prinzip der Sektorenkopplung als Insellösung in der energieautarken Einheit um und ermöglicht dadurch die vollständige Unabhängigkeit der Energieversorgung der energieautarken Einheit von fossilen Energieträgern und Strom aus Kernbrennstoffen. Die Umwandlung der in der geographischen Einheit anfallenden Biomasse in andere Energieträger mittels Power-to-X Vorrichtung zur thermochemischen Umwandlung von Biomasse reduziert die Kosten für Lagerung, Transport und Entsorgung der Biomasse. Es fallen nur die Investitionskosten zur Anschaffung und dem Aufbau des Hybridkraftwerks sowie Wartungskosten des Hybridkraftwerks an.

In bevorzugten Ausführungsformen umfasst das Hybridkraftwerk eine Power-to-Gas Vorrichtung zur thermochemischen Umwandlung, vorzugsweise zur hydrothermalen Umwandlung von Biomasse in ein Reaktionsprodukt, das aus Synthesegas besteht oder Synthesegas umfasst. Das erzeugte Synthesegas umfasst ein oder mehrere Komponenten ausgewählt aus Wasser, CO₂, CO, H₂, CH₄, niedermolekularen Kohlenwasserstoffen (niedermolekular = 1 bis 4 Kohlenstoffatome). In bevorzugten Ausführungsformen umfasst das Hybridkraftwerk eine PtG Vorrichtung zur Umwandlung von Biomasse in Synthesegas und ggf. weitere Energieträger (z.B. Wärme) wobei das erzeugte Synthesegas im Wesentlichen, vorzugsweise mindestens 80 Vol. %, vorzugsweise mindestens 90 Vol. % Wasser, CO₂, CO, H₂ und CH₄ umfasst. In besonders bevorzugten Ausführungsformen umfasst das Hybridkraftwerk eine PtG Vorrichtung beispielsweise einen Reaktor zur überkritischen hydrothermalen Vergasung von Biomasse in überkritischem Wasser unter Sauerstoffausschluss, vorzugsweise einen Reaktor, der in EP20186443.6 beschrieben ist, wobei das erzeugte Synthesegas im Wesentlichen H₂, CO₂ und CH₄ umfasst und in überkritischem Wasser gelöst ist bzw. wobei das erzeugte Synthesegas beispielsweise zu mindestens 90 Vol. %, vorzugsweise mindestens 95 Vol. % oder mehr aus H₂, CO₂ und CH₄ besteht und in überkritischem Wasser gelöst ist. In diesen bevorzugten Ausführungsformen des Hybridkraftwerks erfolgt eine Umwandlung von Biomasse in die Energieträger H₂, CO₂ und CH₄.

H₂ und CH₄ sind Energieträger, die direkt verwendet werden können, beispielsweise H₂ zum Antrieb von Wasserstofffahrzeugen. H₂ und CH₄ sind Energieträger, die gespeichert werden können und die in andere Energieträger umgewandelt werden können. Die Umwandlung von Biomasse und Strom aus erneuerbaren Energiequellen in die Energieträger H₂ und CH₄ trägt wesentlich zur autarken Energieversorgung der geographischen Einheit durch das Hybridkraftwerk bei. Im erfindungsgemäßen Hybridkraftwerk bzw. der erfindungsgemäßen energieautarken Einheit sind deshalb PtG Vorrichtungen zur thermochemischen Umwandlung von Biomasse bevorzugt, bei denen überwiegend H₂ und CH₄ erzeugt wird.

Das erfindungsgemäße Hybridkraftwerk umfasst einen oder mehrere Energiespeicher. In bevorzugten Ausführungsformen umfasst das Hybridkraft zwei bis 20, vorzugsweise drei, vier, fünf oder mehr Energiespeicher. Die Energiespeicher können gleich oder verschieden sein, vorzugsweise umfasst das Hybridkraftwerk mindestens zwei, vorzugsweise drei verschiedene Energiespeicher. In bevorzugten Ausführungsformen umfasst das Hybridkraft als Energiespeicher einen oder mehrere Gasspeicher, beispielsweise Druckgasspeicher wie Niederdruckgasspeicher, Mitteldruckgasspeicher, Hochdruckgasspeicher, vorzugsweise Mitteldruckspeicher. Mitteldruckspeicher speichern Gase bei einem Druck von 40 - 100 bar.

In einzelnen Ausführungsformen umfasst das Hybridkraftwerk einen Energiespeicher für das erzeugte Synthesegas (= Syn-Speicher), vorzugsweise ist der Syn-Speicher ein Druckgasspeicher. In bevorzugten Ausführungsformen umfasst das Hybridkraftwerk einen Energiespeicher für Wasserstoff (= H₂ - Speicher) **6,** vorzugsweise einen oder mehrere H₂ - Druckgasspeicher, besonders bevorzugt einen oder mehrere H₂-Mitteldruckspeicher. In weiteren bevorzugten Ausführungsformen umfasst das Hybridkraftwerk einen oder mehrere Energiespeicher für Methan (= CH₄-Speicher) **7** vorzugsweise einen oder mehrere CH₄-Druckgasspeicher. In besonders bevorzugten Ausführungsformen umfasst das Hybridkraftwerk einen H₂ - Speicher **6** und einen CH₄ - Speicher **7,** wobei vorzugsweise H₂ - Speicher **6** und einen CH₄ - Speicher **7** Druckgasspeicher sind.

Die Energieträger CH₄ und H₂ eignen sich besonders gut zur Speicherung von Energie, als Energievorrat für eine Zeit, zu der die Energieversorgung der geographischen Einheit nicht oder nicht ausreichend durch die Anlage zur Gewinnung von Strom aus einer erneuerbaren Energiequelle gedeckt werden kann. Aufgrund ihrer unterschiedlichen Eigenschaften eignen sich CH₄ und H₂ insbesondere für die Speicherung von Energie für unterschiedlich lange, sich ergänzende Zeiträume. Aufgrund der höheren Energiedichte von CH₄(CH₄ hat im Vergleich zu H₂ bei gleicher Energiedichte nur etwas 1/3 des geometrischen Volumens) eignet sich die Speicherung von CH₄ als Energieträger-Langzeitvorrat, beispielsweise kann im Sommer ein Energieträger - Vorrat angelegt werden, der im Winter die Gewinnung von Strom aus einer erneuerbaren Energiequelle wie Sonne, ergänzt, um die autarke Energieversorgung der geographischen Einheit bzw. der energieautarken Einheit auch im Winter zu sicher zu stellen. Der CH₄ -Speicher **7** eignet sich als Saisonspeicher. Mit dem Energieträger CH₄ aus dem CH₄ - Speicher **7,** vorzugsweise dem CH₄ - Druckgasspeicher kann die Energieversorgung der geographischen Einheit bzw. der energieautarken Einheit über lange Zeiträume wie Wochen und Monate sichergestellt werden. In besonders bevorzugten Ausführungsformen umfasst das Hybridkraftwerk einen CH₄-Speicher **7,** vorzugsweise einen CH₄-Druckgasspeicher als Langzeitspeicher bzw. Saisonspeicher.

In besonders bevorzugten Ausführungsformen umfasst das Hybridkraftwerk einen H₂-Speicher **6,** vorzugsweise einen H₂ - Mitteldruckspeicher als Mittelzeitspeicher zu Speicherung des Energieträgers H₂ für Stunden bis Wochen, beispielsweise 1 bis 24 Stunden, 1 oder mehrere Tage. Aufgrund der geringeren Energiedichte von H₂ im Vergleich zu CH₄, wird für die Speicherung der gleichen Energiemenge ein größeres geometrisches Volumen des Energieträgers H₂ benötigt als für die Speicherung der gleichen Energiemenge CH₄. In bevorzugten Ausformen des Hybridkraftwerks wird nicht benötigtes H₂ in CH₄ umgewandelt und im CH₄-Speicher **7** vorzugsweise einem CH₄- Druckgasspeicher gespeichert. In bevorzugten Ausformen umfasst das Hybridkraftwerk Mittel zur Umwandlung von H₂ in CH₄. Mittel zur Umwandlung von H₂ in CH₄ sind vorzugsweise Anlagen zur Methanisierung **5,** die Wasserstoff und Kohlendioxid zu Methan umsetzen (4 H₂+CO₂ = CH₄). Durch die Anlagen zur Methanisierung **5** kann nicht benötigtes H₂ z.B. aus dem H₂- Speicher **6** bzw. Mittelzeitspeicher oder für die Mobilität nicht benötigtes H₂ in CH₄ für die Langzeitspeicherung umgewandelt werden.

In besonders bevorzugten Ausführungsformen umfasst das Hybridkraftwerk eine Gasaufbereitungsanlage **4.** Die Gasaufbereitungsanlage **4** umfasst vorzugsweise Mittel zur Auftrennung von Synthesegas in die im Synthesegas enthaltenen unterschiedlichen Gase oder Mittel zur Abtrennung einzelner Gase. Vorzugsweise umfasst das Hybridkraftwerk eine Gasaufbereitungsanlage **4** umfassend Mittel zur Abtrennung von H₂ aus dem Synthesegas. Vorzugsweise umfasst das Hybridkraftwerk eine Gasaufbereitungsanlage **4** umfassend Mittel zur Abtrennung von CH₄ aus dem Synthesegas. Vorzugsweise umfasst das Hybridkraftwerk eine Gasaufbereitungsanlage **4** umfassend Mittel zur Abtrennung von CO₂ aus dem Synthesegas. Entsprechende Gasaufbereitungsanlagen **4** und Mittel zur Auftrennung von Synthesegas bzw. zur Abtrennung einzelner Gase sind bekannt, beispielsweise Membrananlagen, Adsorptionsanlagen.

In bevorzugten Ausführungsformen des Hybridkraftwerks umfasst die Gasaufbereitungsanlage **4** Mittel zur Umwandlung von CO₂ zu CH₄, vorzugsweise Anlage zur Methanisierung **5.** In besonders bevorzugten Ausführungsformen umfasst das Hybridkraftwerk eine Power-to-X Vorrichtung zur thermochemischen Umwandlung von Biomasse in andere Energieträger **3,** wobei die Power-to-X Vorrichtung ein Reaktor zur überkritischen hydrothermalen Vergasung von Biomasse in überkritischem Wasser unter Sauerstoffausschluss ist, eine Gasaufbereitungsanlage **4** mit Mitteln zur Abtrennung einzelner Gase aus dem erzeugten Synthesegas, vorzugsweise Mittel zur Abtrennung von H₂, Mittel zur Abtrennung von CH₄ und Anlage zur Methanisierung **5.** In besonders bevorzugten Ausführungsformen umfasst das Hybridkraftwerk eine PtG Vorrichtung zur überkritischen hydrothermalen Vergasung von Biomasse in überkritischem Wasser unter Sauerstoffausschluss, eine Gasaufbereitungsanlage **4** mit Mitteln zur Abtrennung einzelner Gase aus dem erzeugten Synthesegas, vorzugsweise Mittel zur Abtrennung von H₂ und Mittel zur Abtrennung von CH₄ und eine Anlage zur Methanisierung **5** und mindestens zwei Speicher, vorzugsweise einen H₂-Speicher **6** und einen CH₄ - Speicher **7.**

In bevorzugten Ausführungsformen umfasst das Hybridkraftwerk eine Power-to-X Vorrichtung zur thermochemischen Umwandlung von Biomasse in andere Energieträger **3,** wobei die Power-to-X Vorrichtung mit der eine Gasaufbereitungsanlage **4** und eine über eine Leitung für Synthesegas **18** verbunden ist. In bevorzugten Ausführungsformen umfasst das Hybridkraftwerk eine Gasaufbereitungsanlage **4,** H₂-Speicher **6** und Leitung für H₂ **20,** wobei die Gasaufbereitungsanlage **4** mit dem H₂-Speicher **6** über die Leitung für H₂ **20** verbunden ist. In bevorzugten Ausführungsformen umfasst das Hybridkraftwerk eine Gasaufbereitungsanlage **4,** CH₄ - Speicher **7** und Leitung für CH₄ **19,** wobei die Gasaufbereitungsanlage **4** mit dem CH₄-Speicher **7** über die Leitung für CH₄ **19** verbunden ist.

In weiteren bevorzugten Ausführungsformen umfasst das Hybridkraftwerk Kurzzeitspeicher für die Speicherung von Energieträgern für Sekunden und Minuten. Geeignete Kurzzeitspeicher sind beispielsweise Batterie **8,** Akkumulator, Schwingrad. In bevorzugten Ausführungsformen umfasst das Hybridkraftwerk eine Batterie **8** als Kurzzeitspeicher, wobei die Batterie **8** über Leitung für Strom **17** mit der Power-to-X Vorrichtung zur thermochemischen Umwandlung von Biomasse in andere Energieträger **3** und der geographischen Einheit verbunden ist.

Eine bevorzugte Ausführungsform des Hybridkraftwerks umfasst
eine Anlage zur Erzeugung von Strom aus erneuerbarer Energiequelle,
eine PtX Vorrichtung zur thermochemischen Umwandlung von Biomasse in andere Energieträger **3,** wobei die PtX Vorrichtung eine PtG Vorrichtung, vorzugsweise ein Reaktor zur überkritischen hydrothermalen Vergasung von Biomasse in überkritischem Wasser unter Sauerstoffausschluss ist, besonders bevorzugt ein Reaktor, der in EP20186443.6 beschrieben ist,
einen H₂ - Speicher **6** als Mittelzeitspeicher, einen CH₄ - Speicher **7** als Langzeitspeicher, ggf. einen Kurzzeitspeicher beispielsweise eine Batterie **8,**
vorzugsweise eine Gasaufbereitungsanlage **4** umfassend
Mittel zur Abtrennung von H₂ aus dem Synthesegas, Mittel zur Abtrennung von CH₄ aus dem Synthesegas und ggf. eine Anlage zur Methanisierung **5,**
wobei die Gasaufbereitungsanlage **4** mit dem H₂-Speicher **6** über die Leitung für H₂ **20** verbunden ist, wobei die Gasaufbereitungsanlage **4** mit dem CH₄-Speicher **7** über die Leitung für CH₄ **19** verbunden ist, wobei die Batterie **8** über Leitung für Strom **17** mit der Power-to-X Vorrichtung zur thermochemischen Umwandlung von Biomasse in andere Energieträger **3** und der geographischen Einheit verbunden ist.

Das erfindungsgemäße Hybridkraftwerk nutzt erneuerbare Energiequellen zur Erzeugung von Strom. Erneuerbare Energiequellen sind beispielsweise Solarenergie, Windkraft (Windenergie), Wasserkraft, Biomasse und Geothermie. Zur Erzeugung von Strom aus erneuerbarer Energiequelle umfasst das Hybridkraftwerk mindestens eine Anlage zur Erzeugung von Strom aus einer erneuerbaren Energiequelle. Strom aus Solarenergie kann beispielsweise mit Photovoltaik (PV) - Anlagen erzeugt werden. Strom aus Windenergie kann beispielsweise durch Windkraftanlagen erzeugt werden. Strom aus der erneuerbaren Energiequelle Wasser kann beispielsweise durch Wasserkraftanlagen erzeugt werden. Anlagen zur Erzeugung von Strom aus unterschiedlichen erneuerbaren Energiequellen sind bekannt.

In besonderen Ausführungsformen umfasst das erfindungsgemäße Hybridkraftwerk mindestens zwei Anlagen zur Erzeugung von Strom aus erneuerbaren Energiequellen. Das Hybridkraftwerk kann mehr als zwei, beispielsweise drei, vier oder mehr Anlagen zur Erzeugung von Strom aus erneuerbaren Energiequellen umfassen. Diese Anlagen können die gleiche oder unterschiedliche erneuerbare Energiequellen nutzen. In besonderen Ausführungsformen umfasst das Hybridkraftwerk mindestens zwei verschiedene Anlagen zur Erzeugung von Strom aus derselben erneuerbaren Energiequelle. In besonderen Ausführungsformen umfasst das Hybridkraftwerk mindestens zwei Anlagen zur Erzeugung von Strom aus zwei unterschiedlichen erneuerbaren Energiequellen. In bevorzugten Ausführungsformen umfasst das Hybridkraftwerk mindestens zwei verschiedene Anlagen zur Erzeugung von Strom aus zwei verschiedenen erneuerbaren Energiequellen. Beispielsweise umfasst das Hybridkraftwerk mindestens eine Anlage zur Erzeugung von Strom aus Solarenergie **1** und mindestens eine Anlage zur Erzeugung von Strom aus Wasserkraft. Beispielsweise umfasst das Hybridkraftwerk mindestens eine Anlage zur Erzeugung von Strom aus Solarenergie **1** und mindestens eine Anlage zur Erzeugung von Strom aus Windenergie **2.** Beispielsweise umfasst das Hybridkraftwerk mindestens eine Anlage zur Erzeugung von Strom aus Wasserkraft und mindestens eine Anlage zur Erzeugung von Strom aus Windenergie **2.**

In besonders bevorzugten Ausführungsformen umfasst das Hybridkraftwerk eine Anlage zur Erzeugung von Strom aus Solarenergie **1** und eine Anlage zur Erzeugung von Strom aus Windenergie **2.** Jede Anlage zur Erzeugung von Strom aus erneuerbarer Energiequelle im Hybridkraftwerk kann ein oder mehrere Elemente zur Erzeugung von Strom aus erneuerbarer Energiequelle umfassen, beispielsweise eine Windkraftanlage kann ein oder mehrere Windräder umfassen. Entsprechende Anlagen zur Erzeugung von Strom aus Solarenergie **1** und zur Erzeugung von Strom aus Windenergie **2** sind bekannt und können je nach geographischer Lage der geographischen Einheit und des zur Energieversorgung notwendigen Energiebedarfs der geographischen Einheit zu bestimmten Zeiten, ausgewählt werden.

In bevorzugten Ausführungsformen umfasst das Hybridkraftwerk zwei, drei oder mehrere Power-to-X Vorrichtungen zur Umwandlung von erzeugtem Strom aus erneuerbaren Energiequellen in andere Energieträger. Dadurch wird die Erzeugung von Strom aus erneuerbaren Energiequellen mit den anderen Sektoren in der energieautarken Einheit d.h. in dem Hybridkraftwerk und in der geographischen Einheit gekoppelt. In besonders bevorzugten Ausführungsformen umfasst das Hybridkraftwerk zwei, drei oder mehrere Power-to-Gas Vorrichtung zur Umwandlung von erzeugtem Strom aus erneuerbaren Energiequellen in Gas.

In besonders bevorzugten Ausführungsformen umfasst das Hybridkraftwerks eine Power-to-Gas Vorrichtung, wobei die Power-to-Gas Vorrichtung ein Elektrolyseur **10** ist, besonders bevorzugt ein Elektrolyseur **10** zur Elektrolyse von Wasser, beispielsweise ein PEM-Elektrolyseur (PEM = Protonen-Austausch-Membran) ist. In besonders bevorzugten Ausführungsformen umfasst das Hybridkraftwerk einen PEM-Elektrolyseur zur Umwandlung von Wasser und Strom aus erneuerbaren Energiequellen in H₂. Der Elektrolyseur **10** z.B. der PEM-Elektrolyseur wandelt Wasser und erzeugten Strom in den Energieträger H₂ um, wobei erzeugtes H₂ als Energielieferant z.B. für H₂- Fahrzeuge eingesetzt oder als Vorrat gespeichert werden kann (z.B. in dem H₂-Mitteldruckspeicher) oder wobei H₂ zur Langzeitspeicherung in den Energieträger CH₄ umgewandelt werden kann (Methanisierung).

Eine bevorzugte Ausführungsform des Hybridkraftwerks umfasst
eine Anlage zur Erzeugung von Strom aus erneuerbarer Energiequelle, beispielsweise eine Anlage zur Erzeugung von Strom aus Solarenergie **1** und/oder eine Anlage zur Erzeugung von Strom aus Windenergie **2,**
eine PtX Vorrichtung zur thermochemischen Umwandlung von Biomasse in andere Energieträger **3,** vorzugsweise eine PtG Vorrichtung, insbesondere einen Reaktor zur überkritischen hydrothermalen Vergasung von Biomasse in überkritischem Wasser unter Sauerstoffausschluss, besonders bevorzugt einen Reaktor, der in EP20186443.6 beschrieben ist,
eine zweite PtX Vorrichtung, wobei die zweite PtX Vorrichtung eine PtG Vorrichtung zur Umwandlung von Strom aus erneuerbarer Energiequelle in Wasserstoff ist, vorzugsweise ein Elektrolyseur **10** zur Elektrolyse von Wasser, besonders bevorzugt ein PEM-Elektrolyseur zur Elektrolyse von Wasser,
eine Gasaufbereitungsanlage **4,** wobei die Gasaufbereitungsanlage **4** Mittel zur Abtrennung von H₂ aus dem Synthesegas, Mittel zur Abtrennung von CH₄ aus dem Synthesegas und eine Anlage zur Methanisierung **5** umfasst,
mehrere Energiespeicher, wobei mindestens ein Energiespeicher ein H₂-Speicher **6** und mindestens ein Energiespeicher ein CH₄-Speicher **7** und mindestens ein Energiespeicher eine Batterie **8** ist,
wobei der Elektrolyseur **10** über eine Leitung für H₂ **20** mit dem H₂-Speicher **6** verbunden ist,
wobei die PtX Vorrichtung zur thermochemischen Umwandlung von Biomasse in andere Energieträger **3** mit der Gasaufbereitungsanlage **4** über eine Leitung für Synthesegas **18** verbunden ist,
wobei die Gasaufbereitungsanlage **4,** vorzugsweise die Anlage zur Methanisierung **5** über eine Leitung für CH₄ **19** mit dem CH₄-Speicher **7** verbunden ist,
wobei die Batterie **8** über Leitung für Strom **17** mit der Power-to-X Vorrichtung zur thermochemischen Umwandlung von Biomasse in andere Energieträger **3,** die Batterie **8** über Leitung für Strom **17** mit der zweiten PtX Vorrichtung, vorzugsweise dem Elektrolyseur **10** verbunden ist, die Batterie **8** über Leitung für Strom **17** mit der geographischen Einheit verbunden ist.

Zur Energieversorgung der energieautarken Einheit bzw. der geographischen Einheit können andere Energieträger, beispielsweise Methan oder ein Methan-Wasserstoff-Gemisch zurückverstromt werden. Das erfindungsgemäße Hybridkraftwerk umfasst vorzugsweise ein oder mehrere Vorrichtungen zur Rückverstromung von anderen Energieträgern, vorzugsweise Vorrichtungen zur Rückverstromung von gasförmigen Energieträgern. Entsprechende Vorrichtungen zur Rückverstromung sind bekannt. In bevorzugten Ausführungsformen umfasst das Hybridkraftwerk eine Vorrichtung zur Rückverstromung von Methan oder von Methan-Wasserstoff-Gemisch. In bevorzugten Ausführungsformen umfasst das Hybridkraftwerk Gasmotor und / oder Gasturbine **13** und / oder Brennstoffzelle **14** zur Rückverstromung.

In bevorzugten Ausführungsformen des Hybridkraftwerks wird Strom aus erneuerbarer Energiequelle und / oder aus rückverstromtem Energieträger, der zuvor mit der Anlage zur Erzeugung von Strom aus erneuerbarer Energiequelle erzeugt worden und ggf. gespeichert worden ist, zur Energieversorgung des Hybridkraftwerks verwendet, beispielsweise zur thermochemischen Umwandlung der Biomasse, beispielsweise zur Kompression und Erwärmung von Biomasse im Reaktor und / oder zum Betrieb des Elektrolyseurs **10.** Das Hybridkraftwerk kann zur Speicherung erzeugte Abwärme aller Prozesse Wärmespeicher **9** umfassen und ggf. eine Wärmepumpe **11** zur Wärmeversorgung z.B. Heizung, Warmwasser der geographischen Einheit. Die Anlage(n) zur Erzeugung von Strom aus erneuerbarer Energiequelle, die Power-to-X Vorrichtung(en), die Gasaufbereitungsanlage **4,** die Energiespeicher und die Vorrichtung(en) zur Rückverstromung sind im Hybridkraftwerk entsprechend angeordnet und miteinander verbunden.

Das erfindungsgemäße Hybridkraftwerk oder die energieautarke Einheit können neben der geographischen Einheit weitere Energieverbraucher umfassen, die mit Strom oder anderen Energieträgern, die im erfindungsgemäßen Hybridkraftwerk erzeugt werden, mit Energie versorgt werden.

Das Hybridkraftwerk kann eine Verbindung zum Erdgasnetz **12** umfassen, zur Einspeisung von CH₄ in das Erdgasnetz **12.** Im Hybridkraftwerk erzeugtes und zur Energieversorgung der geographischen Einheit nicht benötigtes CH₄ kann in das Erdgasnetz **12** eingespeist werden. Im Hybridkraftwerk erzeugtes CH₄ ist Biomethan, da es ausschließlich aus erneuerbaren Energiequellen erzeugt wird. Überschüssiges Biomethan kann auch als Grundstoff in der chemischen Industrie eingesetzt werden. Überschüssiger Wasserstoff kann beispielsweise als Treibstoff für H₂ - betriebene Fahrzeuge eingesetzt werden. Das Hybridkraftwerk bzw. die energieautarke Einheit kann zu diesem Zweck Trailer Abfüllstation **25,** Betriebstank **26,** öffentlichen Tank **27** umfassen. Überschüssiger Strom aus erneuerbarer Energiequelle kann in das Stromnetz eingespeist oder als Treibstoff für Strom - betriebene Fahrzeuge (E-Auto) eingesetzt werden. Das Hybridkraftwerk bzw. die energieautarke Einheit kann zu diesem Zweck eine Verbindung zum Stromnetz und / oder Strom -Tankstellen umfassen. Dadurch trägt das erfindungsgemäße Hybridkraftwerk bzw. die energieautarke Einheit über die Energieversorgung der geographischen Einheit (Insellösung) hinaus zur Implementierung der flächendeckenden Energiewende bei.

Das Hybridkraftwerk ist zur autarken Energieversorgung vorzugsweise in der Nähe der zu versorgenden geographischen Einheit angeordnet.

"Autarke Energieversorgung" bedeutet, dass die Energieversorgung einer geographischen Einheit durch das Hybridkraftwerk zu jeder Tages-, Nacht- und Jahreszeit vollständig gedeckt wird. Die Energieversorgung der geographischen Einheit umfasst Beleuchtung, Heizung, Kühlung, Warmwasser, Strom für diverse technische Geräte beispielsweise Haushalts-, Büro-, Unterhaltungs- und Gartengeräte. Dabei wird der im Hybridkraftwerk aus erneuerbarer Energiequelle erzeugte Strom und die mittels Power-to-X Vorrichtungen durch thermochemische Umwandlung von Biomasse in andere Energieträger **3** erzeugten Energieträger zur Energieversorgung der geographischen Einheit genutzt. Sofern erforderlich wird zur autarken Energieversorgung Biomasse von außen zugeführt. Eine Zufuhr von Biomasse kann erforderlich sein, wenn die in der geographischen Einheit vorhandene bzw. zur Entsorgung anfallende Biomasse nicht ausreichend ist, um die Energieversorgung der energieautarken Einheit, insbesondere der geographischen Einheit zu jeder Tages-, Nacht- und Jahreszeit vollständig zu decken.

Biomasse, die in dem Hybridkraftwerk in der Power-to-X Vorrichtung zur thermochemischen Umwandlung von Biomasse in andere Energieträger **3,** beispielsweise der PtG Vorrichtung, insbesondere dem Reaktor als Edukt eingesetzt wird, kann beispielsweise ausgewählt werden aus Schlamm, Klärschlamm, Biomüll, Abfällen aus Biogasanlagen, wässrigen organischen Abfällen, industriellen Abfällen, kommunalen Abfällen, tierischen Abfällen, landwirtschaftlichen Abfällen, Gartenabfällen, Tiermehl, pflanzlichen Abfällen, Trester, Flugasche, Klärschlammflugasche, Abfällen der Lebensmittelindustrie, Bohrschlämmen, Gärresten, Gülle und Abwasser wie industriellem Abwasser. Vorzugsweise ist die Biomasse die als Edukt in der PtX Vorrichtung zur thermochemischen Umwandlung von Biomasse in andere Energieträger **3,** z.B. PtG Vorrichtung, insbesondere Reaktor eingesetzt wird, pumpfähig. Biomasse muss ggf. verdünnt werden, bevor sie als Edukt eingesetzt werden kann. Vorzugsweise weist die Biomasse ggf. nach Verdünnung einen hohen Wasseranteil auf, beispielsweise mindestens 80 Gew. % Wasser, vorzugsweise mindestens 85 Gew. % Wasser, vorzugsweise mindestens 86 Gew. %, besonders bevorzugt 87 Gew. % bis 88 Gew. % Wasser. Biomasse mit einem Wassergehalt von mindestens 80 Gew. %.

Als Biomasse können auch feste organische Abfälle eingesetzt werden, beispielsweise Papier, Pappe, Kunststoffe, Lebensmittelreste, Gartenabfälle und andere Abfälle der Biotonne. Feste organische Abfälle werden durch Schneide- oder Zerkleinerungsvorrichtungen geleitet und mit Wasser oder wässrigen Lösungen verdünnt. Die Biomasse umfasst Kohlenstoff-haltige Verbindungen beispielsweise organische Bestandteile und / oder Kunststoffe. Die Biomasse kann zudem variierende Mengen anorganische Bestandteile enthalten wie beispielsweise Sand, Metalle und Schwermetalle beziehungsweise Metallionen, Metallsalze, Metalloxide, Schwermetallionen, Schwermetallsalze, Schwermetalloxide, Phosphor, Phosphoroxid, Phosphat, Stickstoff, Stickoxide, Ammonium. Die Biomasse kann Abfall sein, der in der geographischen Einheit anfällt, beispielsweise Biomüll der Bewohner eines Wohngebäudes **15.** Alternativ kann der energieautarken Einheit Biomasse als Edukt für die Power-to-X Vorrichtung zur Umwandlung von Biomasse in andere Energieträger **3** von außen zugeführt werden, beispielsweise (Garten-)Abfälle oder Klärschlamm, der in der Umgebung der energieautarken Einheit anfällt oder Biomasse aus anderen Regionen, die entsorgt oder recycelt werden muss, beispielsweise Klärschlamm.

In bevorzugten Ausführungsformen umfasst das Hybridkraftwerk eine PtX Vorrichtung zur thermochemischen Umwandlung von Biomasse in andere Energieträger **3,** wobei die PtX Vorrichtung eine PtG Vorrichtung zur hydrothermalen Vergasung von Biomasse ist, wobei die Vorrichtung Mittel umfasst, um in der Biomasse vorhandene Wertstoffe vor oder während der hydrothermalen Vergasung abzutrennen und auf diese Weise aus der Biomasse zurückzugewinnen. In bevorzugten Ausführungsformen umfasst das Hybridkraftwerks einen Reaktor, der in EP20186443.6 beschrieben ist, wobei Wertstoffe vor der überkritischen hydrothermalen Vergasung der Biomasse aus der Biomasse abgetrennt werden. In Biomasse können Wertstoffe wie Phosphor beispielsweise in Form von Phosphat, Stickstoff beispielsweise in Form von Ammonium, Metalle beispielsweise in Form von Metallionensalzen, Schwermetalle beispielsweise in Form von Schwermetallionensalzen, Silizium beispielsweise in Form von Sand enthalten sein, die vor, während oder nach der thermochemischen Umwandlung, insbesondere der hydrothermalen Umwandlung der Biomasse in andere Energieträger in der PtX Vorrichtung abgetrennt und einem Recycling-Prozess zugeführt werden können. Ein entsprechendes Hybridkraftwerk erfüllt die Aufgabe, eine geographische Einheit autark mit Energie zu versorgen und gewinnt gleichzeitig Wertstoffe aus Biomasse zurück. Je nach Ausführungsform können die in Biomasse enthaltenen Wertstoffe in ein oder mehreren Wertstofffraktionen erhalten werden. Geeignete PtX Verfahren und PtX Vorrichtungen sind in EP 3 434 382 B1, PCT/EP2018/000355 und EP20186443.6 beschrieben.

In besonders bevorzugten Ausführungsformen umfasst das Hybridkraftwerk einen Reaktor zur überkritischen hydrothermalen Vergasung von Biomasse unter Sauerstoffausschluss, wobei komprimierte Biomasse auf bis zu 550 Grad Celsius erhitzt und vorhandene Wert- und Nährstoffe vor der überkritischen hydrothermalen Vergasung der Biomasse unter Sauerstoffausschluss abgetrennt werden. In besonders bevorzugten Ausführungsformen umfasst das Hybridkraftwerk einen in EP20186443.6 beschrieben Reaktor zur überkritischen hydrothermalen Vergasung von auf 25 bis 35 MPa komprimierter Biomasse unter Sauerstoffausschluss, wobei die komprimierte Biomasse auf bis zu 550 Grad Celsius erhitzt und vorhandene Wertstoffe abgetrennt werden, die komprimierte Biomasse nach der Abtrennung von Wertstoffen zur Umwandlung der komprimierten Biomasse in den Energieträger Synthesegas auf 600 bis 700 Grad Celsius erwärmt wird (=hydrothermale Vergasung der Biomasse in überkritischem Wasser unter Sauerstoffausschluss). Die Erwärmung der auf 25 bis 35 MPa komprimierten Biomasse auf bis zu 550 Grad kann dabei in einer oder mehreren Stufen erfolgen. Vorzugsweise erfolgt die Erwärmung in drei Stufen zur Abtrennung von drei Wertstofffraktionen wie in EP 3 434 382 B1 beschrieben. Das erfindungsgemäße Hybridkraftwerk umfasst vorzugsweise einen in EP20186443.6 oder PCT/EP2018/000355 beschrieben Reaktor zur stufenweisen Erwärmung von auf 25 bis 35 MPa komprimierter Biomasse und Abtrennung von mehreren Wertstofffraktionen. Das erfindungsgemäße Hybridkraftwerk umfasst vorzugsweise einen in EP20186443.6 beschrieben Reaktor zur stufenweisen Erwärmung von auf 25 bis 35 MPa komprimierter Biomasse und Abtrennung von drei Wertstofffraktionen, wobei die auf 25 bis 35 MPa komprimierte Biomasse auf 200 bis 300 Grad Celsius erwärmt und eine Wertstofffraktion abgetrennt wird, die auf 25 bis 35 MPa komprimierte Biomasse dann auf 300 bis 400 Grad Celsius erwärmt und eine Wertstofffraktion abgetrennt wird, die auf 25 bis 35 MPa komprimierte Biomasse dann auf 400 bis 550 Grad Celsius erwärmt und eine Wertstofffraktion abgetrennt wird. Entsprechende Verfahren zur überkritischen hydrothermalen Vergasung von Biomasse in überkritischem Wasser unter Sauerstoffausschluss sind in EP 3 434 382 B1 und PCT/EP2018/000355 beschrieben.

Zur Kompression von Biomasse auf 25 bis 35 MPa kann das erfindungsgemäße Hybridkraftwerk oder die erfindungsgemäße energieautarke Einheit eine Hochdruckpumpe umfassen. Das Hybridkraftwerk kann Mittel zur Zerkleinerung der Biomasse umfassen. Das Hybridkraftwerk kann Mittel zur Verdünnung von Biomasse umfassen. Die energieautarke Einheit kann weitere Bestandteile umfassen, beispielsweise Bestandteile, die in EP20186443.6 für Anlagen genannt sind, die die Reaktoren aus EP20186443.6 umfassen.

Abgetrennte Wertstoffe können einem Recycling-Prozess zugeführt werden. Die erfindungsgemäße energieautarke Einheit kann Behälter zur Lagerung von aus Biomasse abgetrennten Wertstoffen umfassen.

Die "geographische Einheit" bildet auf der Basis postalischer Einheiten ein geographisches Gebiet ab und dient als Grundlage für die räumliche Strukturierung der Fläche, die mit dem erfindungsgemäßen Hybridkraftwerk mit Energie versorgt wird. Eine geographische Einheit ist z.B. ein Land, Bundesland, Stadt, Ortsteil, Straße, Landkreis, Region, Bezirk. Erfindungsgemäß umfasst eine geographische Einheit ein oder mehrere Gebäude (= Bauwerke). Ein Gebäude oder Bauwerk ist eine von Menschen errichtete Konstruktion, die nur schwer lösbar mit dem Untergrund verbunden ist oder zumindest in ruhendem Kontakt mit dem Untergrund (Grundstück) steht und somit unbeweglich ist (Immobilien). Das schließt auch Bauwerke ein, die bedingt durch ihre Nutzung bewegliche oder sich bewegende Bauwerksteile haben. Die geographische Einheit umfasst beispielsweise ein oder mehrere Wohngebäude 15, beispielsweise einzelne Häuser wie Einfamilienhaus, Mehrfamilienhaus, Doppelhaus, Reihenhaus, Hochhaus, und Wohngebäudekomplexe, Geschäfte wie Einkaufszonen oder Einkaufszentren, Sportstätten wie Sportstadien oder Sportvereine, Beherbergungsbauten wie Hotels, Ferienanlagen, Campingplatz, Gastronomiebetriebe, Freizeit- und Vergnügungsparks, Verwaltungsgebäude, Industrieanlagen wie Produktionsstätten, Bergwerke **16,** Werkstätten, Fabrikgebäude, Bürogebäude, Lagerhallen, landwirtschaftliche Betriebe wie Ställe und Gewächshäuser, Gesundheitsbauwerke wie Krankenhäuser, Verkehrsbetrieb wie Flughäfen, Seehäfen, Bahnhof. Im Sinne dieser Erfindung kann die geographische Einheit ein oder mehrere Gebäude bzw. Bauwerke umfassen. Die geographische Einheit kann beispielsweise Ansammlung von Wohngebäuden **15** und /oder Gebäuden, die keine Wohngebäude **15** sind, sein beispielsweise Stadt, Stadtteil, Straßenzug, Dorf, Bezirk. Die geographische Einheit kann weitere Energieverbraucher umfassen, beispielsweise Straßenbeleuchtung, Pumpen für die Wasserversorgung.

Eine Ausführungsform der energieautarken Einheit betrifft energieautarke Gebäude insbesondere energieautarke Wohngebäude **15,** wobei die geographische Einheit ein oder mehrere Gebäude, beispielsweise ein Wohngebäude **15** oder mehrere Wohngebäude **15** und ein erfindungsgemäßes Hybridkraftwerk zur autarken Energieversorgung umfasst.

Eine Ausführungsform der energieautarken Einheit betrifft ein energieautarkes Dorf oder Stadt, wobei die geographische Einheit ein Dorf oder eine Stadt und ein erfindungsgemäßes Hybridkraftwerk zur autarken Energieversorgung umfasst.

Eine Ausführungsform der energieautarken Einheit betrifft eine energieautarke Industrieanlage, wobei die geographische Einheit eine Industrieanlage wie beispielsweise ein Bergwerk **16** und ein erfindungsgemäßes Hybridkraftwerk zur autarken Energieversorgung umfasst.

Die autarke Energieversorgung durch Strom aus erneuerbaren Energiequellen erfolgt dabei durch Sektorenkopplung der einzelnen Vorrichtungen und Anlagen im Hybridkraftwerk und Verbindung des Hybridkraftwerks mit der geographischen Einheit. Die Anlage(n) zur Erzeugung von Strom aus erneuerbaren Energiequellen und die geographische Einheit sind zum Austausch der Energieträger miteinander gekoppelt. Die Anlage(n) zur Erzeugung von Strom aus erneuerbarer Energiequelle und die PtX Vorrichtungen sind miteinander gekoppelt, beispielsweise ist die Anlage zur Erzeugung von Strom aus erneuerbarer Energiequelle mit einer Wärmepumpe **11** gekoppelt, beispielsweise ist die Anlage zur Erzeugung von Strom aus erneuerbarer Energiequelle mit der PtX Vorrichtung zur thermochemischen Umwandlung von Biomasse in andere Energieträger **3** gekoppelt, beispielsweise ist die Anlage zur Erzeugung von Strom aus erneuerbarer Energiequelle mit der PtX Vorrichtung zur Umwandlung von Strom aus erneuerbarer Energiequelle in Wasserstoff, vorzugsweise einem Elektrolyseur **10** gekoppelt. Entsprechende Kopplungen sind dem Fachmann bekannt. Die PtX Vorrichtungen sind vorzugsweise ebenfalls miteinander gekoppelt, um Energieträger ineinander umzuwandeln und die Energieträger an verschiedenen Stellen der geographischen Einheit, des Hybridkraftwerks, der energieautarken Einheit zur Energieversorgung nutzen zu können. Vorzugsweise sind die Energiespeicher miteinander, mit den PtX Vorrichtungen und sofern vorhanden den Vorrichtungen zur Rückverstromung gekoppelt. Vorrichtungen zur Erzeugung von Strom aus erneuerbarer Energiequelle, PtX Vorrichtungen und ggf. Wärmepumpen **11** sind mit der geographischen Einheit gekoppelt. Weitere Kopplungen sind möglich und individuell ausgestaltbar. Entsprechende Kopplungen sind dem Fachmann bekannt.

Mit dem Hybridkraftwerk kann die Grundlastenergie der energieautarken Einheit sichergestellt werden. Als Grundlast der energieautarken Einheit bezeichnet man die Belastung des Stromnetzes der energieautarken Einheit, die während eines Tages nicht unterschritten wird. Die Grundlast ist daher abhängig vom Tag der Betrachtung (z.B. jahreszeitliche Schwankungen), der geographischen Einheit (z.B. Größe des Wohngebäudes **15** oder der Industrieanlage), der Auslastung der PtX Vorrichtungen u.s.w..

Mit dem Hybridkraftwerk kann die energieautarke Einheit auch bedarfsangepasst mit Energie versorgt werden. Die bedarfsangepasste Versorgung der energieautarken Einheit erfolgt über die Kombination aus Strom aus erneuerbarer Energiequelle und ggf. der Ergänzung durch gespeicherte Energieträger (Kopplung), beispielsweise Rückverstromung des gespeicherten Methans oder eines Methan-Wasserstoff-Gemisches. Auf diese Weise kann auch bei Verbrauchsspitzen eine ausreichende und autarke Energieversorgung der geographischen Einheit bzw. der energieautarken Einheit sichergestellt werden.

Besondere Vorteile der Erfindung sind die Unabhängigkeit der Energieversorgung der betreffenden geographischen Einheiten bzw. energieautarken Einheiten von fossilen Brennstoffen und der Energie aus Atomkraft. Dadurch sind kleine und große energieautarke Insellösungen möglich, z.B. energieautarke Gebäude, energieautarke Wohnungen, energieautarke Industrieanlagen, energieautarke Dörfer und energieautarke Städte. Die Energiekosten können stabil gehalten werden. Ebenso können die Entsorgungskosten stabil gehalten werden. Die vollständige Rückgewinnung und Umwandlung bzw. Verwendung von Biomasse macht das Hybridkraftwerk besonders umweltschonend. Ein weiterer Vorteil sind die geringen logistischen Anforderungen. Die Energie wird dort verwendet, umgewandelt, gespeichert und ggf. rückverstromt, wo sie erzeugt wird. Dadurch werden auch Energieverluste durch lange Transportwege minimiert.

Die Steuerung des Hybridkraftwerks bzw. der energieautarken Einheit kann beispielsweise über ein Energiemanagementsystem basierend auf Verbrauchsdaten erfolgen.

Ein oder mehrere Teile des Hybridkraftwerks können in Containern angeordnet sein. Auf diese Weise kann das Hybridkraftwerk schlüsselfertig geliefert werden und beispielsweise in der Umgebung bestehender oder neu zu bauender geographischer Einheiten zur Energieversorgung angeordnet und mit den geographischen Einheiten verbunden werden.

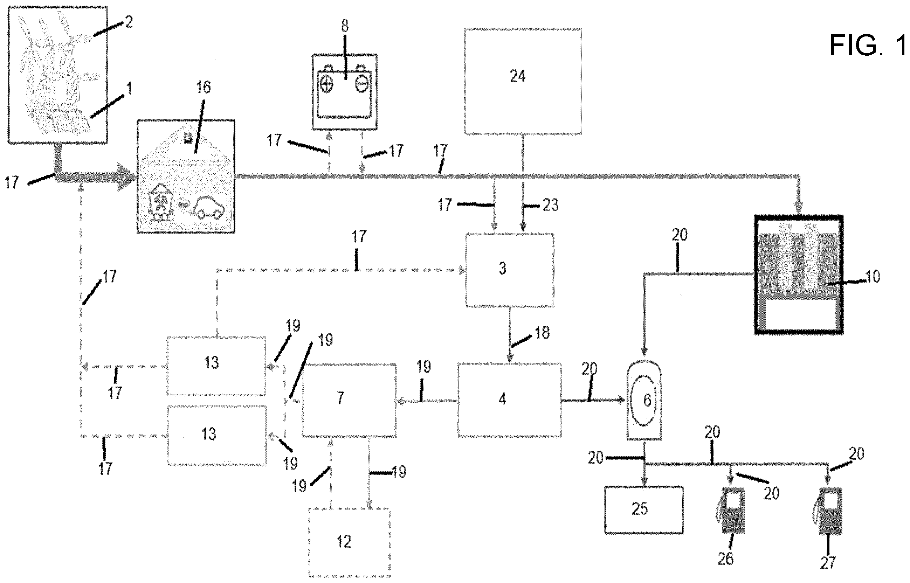

**Figur 1** zeigt ein energieautarkes Bergwerk **16** (=energieautarke Einheit) umfassend ein erfindungsgemäßes Hybridkraftwerk und ein Bergwerk **16** als geographische Einheit. Das energieautarke Bergwerk **16** umfasst einen Behälter für die Lagerung von Biomasse **24,** wobei der Behälter über eine Leitung für Biomasse **23** der Power-to-X-Vorrichtung zur thermochemischen Umwandlung von Biomasse in andere Energieträger **3,** vorzugsweise einer Power-to-X Vorrichtung zur hydrothermalen Vergasung von Biomasse zu Synthesegas, verbunden ist. Das erfindungsgemäße Hybridkraftwerk zur autarken Energieversorgung des Bergwerks **16** umfasst eine Anlage zur Erzeugung von Strom aus Solarenergie **1** (= Photovoltaik Anlage) und eine Anlage zur Erzeugung von Strom aus Windenergie **2** (= mehrere Windräder), eine Power-to-X Vorrichtung zur thermochemischen Umwandlung von Biomasse in andere Energieträger **3,** einen Elektrolyseur **10,** eine Gasaufbereitungsanlage **4,** einen H₂-Speicher **6,** einen CH₄-Speicher **7,** eine Batterie **8,** zwei Gasturbinen **13.** Die Anlage zur Erzeugung von Strom aus Solarenergie **1** und die Anlage zur Erzeugung von Strom aus Windenergie **2** sind mit dem Bergwerk **16,** der Power-to-X Vorrichtung zur thermochemischen Umwandlung von Biomasse in andere Energieträger **3,** dem Elektrolyseur **10,** den Turbinen **13** über Leitungen für Strom **17** verbunden. Die Power-to-X Vorrichtung zur thermochemischen Umwandlung von Biomasse in andere Energieträger **3** ist mit der Gasaufbereitungsanlage **4** über eine Leitung für Synthesegas **18** verbunden. Der H₂-Speicher **6** ist mit der Gasaufbereitungsanlage **4** und dem Elektrolyseur **10** Leitungen für Wasserstoff **20** verbunden. Der CH₄-Speicher **7** ist mit der Gasaufbereitungsanlage **4,** den Gasturbinen **13** und dem Erdgasnetz **12** über Leitungen für Methan **19** verbunden. Die Anlage zur Erzeugung von Strom aus Solarenergie **1,** die Anlage zur Erzeugung von Strom aus Windenergie **2,** die Gasturbinen **13,** die Batterie **8** liefern den Strom für den Betrieb des Hybridkraftwerks und die autarke Energieversorgung des Bergwerks **16.** Die Sektorenkopplung erfolgt durch die Umwandlung von Strom aus erneuerbarer Energiequelle Sonne und Wind in andere Energieträger in den Power-to-X Vorrichtungen Elektrolyseur **10,** Powert-to-X Vorrichtung zur thermochemischen Umwandlung von Biomasse in andere Energieträger **3,** Gasturbinen **13.** Die Kurzzeitspeicherung von Energieträgern erfolgt in Form von Strom durch die Batterie **8,** die Mittelzeitspeicherung erfolgt in Form von Wasserstoff durch den H₂-Speicher **6,** die Langzeitspeicherung erfolgt in Form von Methan durch den CH₄-Speicher **7.** Zur Sektorenkopplung sind im Hybridkraftwerk die Speicher durch geeignete Leitungen, nämlich Leitungen für Gas und Leitungen für Strom **17** miteinander verbunden. Das Hybridkraftwerk ist mit dem Bergwerk **16** über Leitungen für Strom **17** verbunden. Das energieautarke Bergwerk **16** umfasst Trailer Abfüllstation **25,** Betriebstank **26** und öffentlichen Tank **27** für Wasserstoff-betriebene Fahrzeuge, die über Leitungen für Wasserstoff **20** mit dem Hybridkraftwerk verbunden sind.

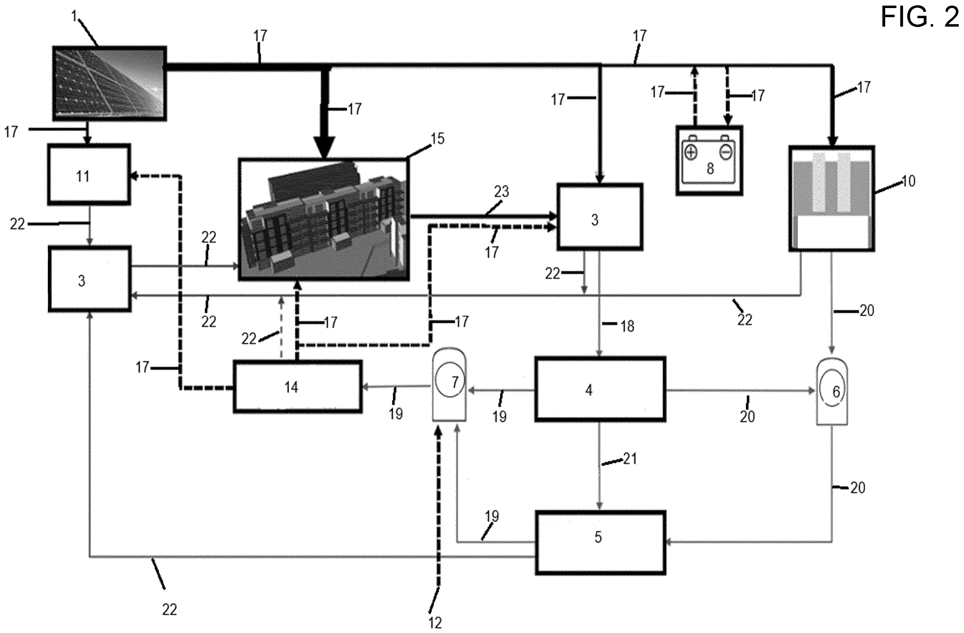

**Figur 2** zeigt ein energieautarkes Wohngebäude **15** (=energieautarke Einheit) umfassend ein erfindungsgemäßes Hybridkraftwerk und ein Wohngebäude **15** als geographische Einheit. Das erfindungsgemäße Hybridkraftwerk zur autarken Energieversorgung des Wohngebäudes **15** umfasst eine Anlage zur Erzeugung von Strom aus Solarenergie **1** (= Photovoltaik Anlage), eine Power-to-X Vorrichtung zur thermochemischen Umwandlung von Biomasse in andere Energieträger **3** vorzugsweise eine Power-to-X Vorrichtung zur hydrothermalen Vergasung von Biomasse zu Synthesegas, einen Elektrolyseur **10,** eine Gasaufbereitungsanlage **4,** eine Anlage zur Methanisierung **5,** einen H₂-Speicher **6,** einen CH₄-Speicher **7,** Wärmespeicher **9,** eine Batterie **8,** Brennstoffzelle **14,** Wärmepumpe **11.** Die Anlage zur Erzeugung von Strom aus Solarenergie **1** ist mit dem Wohngebäude **15,** der Power-to-X Vorrichtung zur thermochemischen Umwandlung von Biomasse in andere Energieträger **3,** dem Elektrolyseur **10,** der Wärmepumpe **11** über Leitungen für Strom **17** verbunden. Die Power-to-X Vorrichtung zur thermochemischen Umwandlung von Biomasse in andere Energieträger **3** ist mit der Gasaufbereitungsanlage **4** über eine Leitung für Synthesegas **18** verbunden. Der H₂-Speicher **6** ist mit der Gasaufbereitungsanlage **4,** der Anlage zur Methanisierung **5,** dem Elektrolyseur **10** über Leitungen für Wasserstoff **20** verbunden. Der CH₄-Speicher **7** ist mit der Gasaufbereitungsanlage **4,** der Anlage zur Methanisierung **5,** der Brennstoffzelle **14** und dem Erdgasnetz **12** über Leitungen für Methan **19** verbunden. Die Anlage zur Erzeugung von Strom aus Solarenergie **1,** die Brennstoffzelle **14,** die Batterie **8** liefern den Strom für den Betrieb des Hybridkraftwerks und die autarke Energieversorgung des Wohngebäudes **15.** Die Sektorenkopplung erfolgt durch die Umwandlung von Strom aus erneuerbarer Energiequelle Sonne in andere Energieträger in den Power-to-X Vorrichtungen Elektrolyseur **10,** Powert-to-X Vorrichtung zur thermochemischen Umwandlung von Biomasse in andere Energieträger **3,** Brennstoffzelle **14.** Die Kurzzeitspeicherung von Energieträgern erfolgt in Form von Strom durch die Batterie **8,** die Mittelzeitspeicherung erfolgt in Form von Wasserstoff durch den H₂-Speicher **6,** die Langzeitspeicherung erfolgt in Form von Methan durch den CH₄-Speicher **7.** Zur Sektorenkopplung sind im Hybridkraftwerk die Energiespeicher durch geeignete Leitungen, nämlich Leitungen für Gas und Leitungen für Strom **17** miteinander verbunden. Das Hybridkraftwerk ist mit dem Wohngebäude **15** über Leitungen für Strom **17** und Leitungen für Wärme **22** verbunden. Das Hybridkraftwerk umfasst einen Wärmespeicher **9,** der über Leitungen für Wärme **22** mit der Vorrichtung zur thermochemischen Umwandlung von Biomasse in andere Energieträger **3,** dem Elektrolyseur **10,** der Anlage zur Methanisierung **5,** der Wärmepumpe **11** verbunden ist, um die Abwärme die bei der Umwandlung in andere Energieträger entsteht, möglichst vollständig zu nutzen. Der Wärmespeicher **9** ist mit dem Wohngebäude **15** verbunden, so dass die Wärme aus dem Wärmespeicher **9** beispielsweise zur Heizung des Wohngebäudes und / oder zur Warmwasserbereitung verwendet werden kann. Das Wohngebäude **15** ist über eine Leitung für Biomasse **23** mit der Vorrichtung zur thermochemischen Umwandlung von Biomasse **3** verbunden.

### Beispiel 1: Energieautarke Einheit umfassend ein Bergwerk 16

Dieses Beispiel betrifft eine energieautarke Einheit umfassend ein Bergwerk **16** als geographische Einheit und ein Hybridkraftwerk zur autarken Energieversorgung des Bergwerks **16.**

Der energieintensive Betrieb eines konventionellen Bergwerks **16** führt zu hohen Energiekosten. Zusätzlich führen die andauernden Novellierungen des EU-Emissionsgesetzes zu immer niedrigeren Grenzwerten für NOx- und CO₂-Emissionen, auch für Bergwerke **16.** Die Anschaffung von emissionsärmeren bzw. emissionslosen Fahrzeugen für Bergwerke **16** ist teuer.

Der Bedarf zur Energieversorgung des Bergwerks **16** liegt bei ca. 14 GWh pro Jahr mit einer Grundlast von ca. 900 kW und einer Peaklast von ca. 2.800 kW. Mit zwei Windenergie- und einer Photovoltaik-Anlage kann das Bergwerk **16** nicht kontinuierlich und bedarfsorientiert mit Energie versorgt werden. Aufgrund von Wind- und Dunkelflauten (kein Wind und keine Sonne) kommt es in jedem Szenario bei dem als Energieträger für das Bergwerk **16** ausschließlich Strom aus erneuerbarer Energiequelle Wind und Sonne erzeugt wird, zur Notwendigkeit fossile Energieträger zuführen zu müssen, um die Energieversorgung zu allen Tages-, Nacht- und Jahreszeiten zu gewährleisten.

Ein erfindungsgemäßes Hybridkraftwerk kann das Bergwerk **16** autark mit Energie versorgen, wobei die Energie nur aus erneuerbaren Energiequellen stammt. Dadurch wird das Bergwerk **16** unabhängig vom Verbrauch fossiler Energieträger und klimaneutral.

Das Hybridkraftwerk zur autarken Energieversorgung des Bergwerks **16** umfasst zwei Anlagen zur Erzeugung von Strom aus Windenergie **2** (zwei Windkraftanlagen) und eine Anlage zur Erzeugung von Strom aus Solarenergie **1** (Photovoltaik-Anlage),
eine PtX Vorrichtung zur thermochemischen Umwandlung von Biomasse in andere Energieträger **3,** nämlich einen Reaktor zur überkritischen hydrothermalen Vergasung von Klärschlamm unter Sauerstoffausschluss, vorzugsweise einen Reaktor aus EP20186443.6, wobei vor der überkritischen hydrothermalen Vergasung die in dem Klärschlamm enthaltenen Wertstoffe in mindestens drei Fraktionen abgetrennt werden,
eine zweite PtX Vorrichtung nämlich einen Elektrolyseur **10** zur Umwandlung von erzeugtem Strom in den Energieträger Wasserstoff,
eine Gasaufbereitungsanlage **4** umfassend Mittel zur Trennung von erzeugtem Synthesegas in H₂, CO₂ und CH₄ und umfassend eine Anlage zur Methanisierung **5,**
mehrere Energiespeicher, umfassend einen CH₄-Speicher **7** als Langzeitspeicher, einen Wasserstoffspeicher **6** als Mittelzeitspeicher, eine Batterie **8** als Kurzzeitspeicher,
zwei Gasturbinen **13** zur Rückverstromung von Methan.

Ein bestehendes Bergwerk **16,** das bereits Windkraft- und Photovoltaik-Anlagen umfasst, kann ergänzt werden, um das Hybridkraftwerk zu bauen. Durch die Ergänzung der bestehenden Anlage zur Erzeugung von Strom aus erneuerbaren Energiequellen durch einen Reaktor zur überkritischen hydrothermalen Vergasung von Klärschlamm unter Sauerstoffausschluss, einen Elektrolyseur **10,** Energiespeicher, Gasaufbereitungsanlage **4,** und Gasturbinen **13** kann die autarke Energieversorgung des Bergwerks **16** auch in Wind- und Dunkelflauten sichergestellt werden. Das Bergwerk **16** und das Hybridkraftwerk bilden eine energieautarke Einheit. Die energieautarke Einheit umfasst eine Verbindung zum Erdgasnetz **12** und Tankstellen für Wasserstoff-betriebene Fahrzeuge, wie Trailer Abfüllstationen **25** und bergwerksinterne und öffentliche Tankstellen für H₂-betriebene Fahrzeuge.

Die energieautarke Einheit, nämlich das energieautarke Bergwerk **16** ist in Fig. 1 dargestellt.

Das energieautarke Bergwerk **16** ermöglicht im Bergwerk **16** die kostengünstige Umstellung auf emissionslose, Wasserstoff-angetriebene Fahrzeuge für das Bergwerk **16,** da die Eigenversorgung mit Wasserstoff in der energieautarken Einheit möglich ist.

Der Reaktor zur überkritischen hydrothermalen Vergasung von Klärschlamm unter Sauerstoffausschluss dient gleichzeitig der Verwertung von Klärschlamm. Der Reaktor gemäß EP20186443.6 zur überkritischen hydrothermalen Vergasung von Klärschlamm unter Sauerstoffausschluss hat beispielsweise eine Durchsatzkapazität von 37 Tonnen Klärschlamm pro Jahr. Dabei wird der Energieträger Klärschlamm in den Energieträger Synthesegas umgewandelt und gleichzeitig werden Wertstoffe, nämlich wertvolle Nährstoffe bzw. Rohstoffe aus dem Klärschlamm zurückgewonnen. Das energieautarke Bergwerk **16** kann einen oder mehrere Behälter für die Lagerung von Biomasse **24** wie z.B. Klärschlamm umfassen.

Durch die eigene "grüne" Stromerzeugung und die Aufarbeitung von Klärschlamm zu Energieträgern, Nähr- und Rohstoffen in dem energieautarken Bergwerk **16** werden Kosten gesenkt und zusätzliche Einnahmequellen erschlossen. Die autarke Energieversorgung des Bergwerks **16** führt auch zum Wegfall der EEG-Umlage. Der Preis für die autarke Energieversorgung des Bergwerks **16** ist stabil und es ist eine langfristige Energiekostenplanung möglich. Die Emission von CO₂ und Stickoxiden wird reduziert bzw. vermieden. In dem energieautarken Bergwerk kann der Fuhrpark des Bergwerks **16** auf H₂-beriebene Bergwerksfahrzeuge, die mit H₂ aus erneuerbaren Energiequellen (= grünen Wasserstoff) angetrieben werden, umgestellt werden. Der Wasserstoff kann zum Betanken von H₂-beriebenen Bergwerksfahrzeugen und ggf. weiteren H₂-beriebenen Fahrzeugen oder H₂-beriebenen Maschinen verwendet werden. Das führt zu einer langfristigen Lösung des Emissionsproblems untertage. Überschüssiger Wasserstoff kann über H₂-Tankstellen an Dritte verkauft werden. Zu diesem Zweck kann das energieautarke Bergwerk **16** ein oder mehrere Trailer-Abfüllstationen **25** und / oder eine oder mehrere H₂-Tankstellen umfassen.

Das Hybridkraftwerk kann CH₄-Speicher **7** für erzeugtes Biomethan (CH₄) umfassen. In einer bevorzugten Ausführungsform umfasst das Hybridkraftwerk einen oder mehrere CH₄-Speicher **7,** beispielsweise acht Tanks als Druckgasspeicher mit 115 m³ Volumen pro Tank zur Speicherung von CH₄ mit einem Druck von bis zu 80 bar. Die 8 Tanks speichern die Menge an Energieträger CH₄ als Langzeitvorrat, der die Energieversorgung des Bergwerks **16** für 5 Tage sichert.

Das Hybridkraftwerk kann Speicher für erzeugten Biowasserstoff (H₂) umfassen. In einer bevorzugten Ausführungsform umfasst das Hybridkraftwerk einen oder mehrere H₂-Speicher **6,** beispielsweise elf Tanks als Druckgasspeicher mit 115 m³ Volumen pro Tank zur Speicherung von H₂ mit einem Druck von bis zu 40 bar. Die 11 Tanks fungieren als Mittelzeitspeicher und speichern die Menge an Energieträger H₂ die in den nächsten Stunden oder Tagen zur Energieversorgung des Bergwerks und des Fuhrparks benötigt wird. Im Tank wird auch der Wasserstoff gespeichert, der verkauft werden soll.

Zur Rückverstromung umfasst das Hybridkraftwerk insgesamt 9 Turbinen **13,** die den gespeicherten Energieträger CH₄ oder eine Mischung der gespeicherten Energieträger CH₄ und H₂ bei Bedarf in den Energieträger Strom umwandeln. Das erzeugte Methan kann auch in das Erdgasnetz **12** eingespeist werden. Das energieautarke Bergwerk 16 kann zu diesem Zweck eine oder mehrere Leitungen, die den CH₄-Speicher **7** mit dem Erdgasnetz **12** verbinden, umfassen.

Fig. 1 zeigt eine bevorzugte Ausführungsform des energieautarken Bergwerks **16.**

### Beispiel 2: Energieautarkes Wohngebäude 15

Dieses Beispiel betrifft eine energieautarke Einheit umfassend ein Wohngebäude **15** als geographische Einheit und ein Hybridkraftwerk zur autarken Energieversorgung des Wohngebäudes **15.** Das Hybridkraftwerk umfasst eine Anlage zur Erzeugung von Strom aus erneuerbarer Energiequelle, vorzugsweise Photovoltaik-Anlage, Power-to-X Vorrichtung zur thermochemischen Umwandlung von Biomasse in andere Energieträger **3,** vorzugsweise Reaktor EP20186443.6 gemäß zur überkritischen hydrothermalen Vergasung von Biomasse, Elektrolyseur **10,** Gasaufbereitungsanlage **4,** Brennstoffzelle **14,** Wärmepumpe **11,** vier unterschiedliche Energiespeicher nämlich Methanspeicher **7,** Wasserstoffspeicher **6,** Batterie **8,** Wärmespeicher **9.** Das Wohngebäude **15** hat 30 Wohnungen und beherbergt ca. 80 Bewohner. Der Bedarf zur Energieversorgung beträgt ca. 95.000 kWh pro Jahr.

Das Betriebskonzept des Wohngebäudes **15** beruht auf der Energieversorgung mit Strom aus einer Photovoltaik-Anlage. Mit der Photovoltaik-Anlage können ca. 118.000 kWh Strom pro Jahr erzeugt werden, d.h. es werden ca. 25.000 kWh Strom pro Jahr mehr erzeugt, als zur Energieversorgung des Wohngebäudes **15** notwendig sind. Dabei wird in den Monaten März bis September mit der Photovoltaik-Anlage mehr Energie erzeugt, als verbraucht wird (Überdeckung). In den Monaten Oktober bis Februar erzeugt die Photovoltaik-Anlage dagegen weniger Strom, als in dem Wohngebäude **15** benötigt wird (Unterdeckung). Zudem wird der meiste Strom mittags erzeugt, während morgens und abends kein Strom erzeugt wird. Morgens, abends, nachts und in den Monaten Oktober bis Februar kann das Wohngebäude **15** durch Strom aus Solarenergie nicht ausreichend mit Energie versorgt werden, obwohl der im Jahr insgesamt aus Solarenergie erzeugte Strom ausreichend zur autarken Energieversorgung wäre.

Ein erfindungsgemäßes Hybridkraftwerk kann die Energieversorgung des Wohngebäudes **15** zu allen Tages-, Nacht- und Jahreszeiten gewährleisten und das Wohngebäude **15** vollständig und autark mit Energie versorgen, ohne dass fossile Energieträger eingesetzt werden, d.h. energieautark und klimaneutral.

Das Hybridkraftwerk zur autarken Energieversorgung des Wohngebäudes **15** umfasst
eine Anlage zur Erzeugung von Strom aus Solarenergie **1,**
eine PtX Vorrichtung zur thermochemischen Umwandlung von Biomasse in andere Energieträger **3,** nämlich einen Reaktor zur überkritischen hydrothermalen Vergasung von Klärschlamm unter Sauerstoffausschluss, vorzugsweise einen Reaktor aus EP20186443.6, wobei vor der überkritischen hydrothermalen Vergasung die in dem Klärschlamm enthaltenen Wertstoffe in mindestens drei Fraktionen abgetrennt werden,
eine zweite PtX Vorrichtung nämlich einen Elektrolyseur **10** zur Umwandlung von erzeugtem Strom in den Energieträger Wasserstoff,
eine Gasaufbereitungsanlage **4** umfassend Mittel zur Trennung von erzeugtem Synthesegas in H₂, CO₂ und CH₄ und eine Anlage zur Methanisierung **5,**
mehrere Energiespeicher, umfassend einen CH₄-Speicher **7** als Langzeitspeicher, einen Wasserstoffspeicher **6** als Mittelzeitspeicher, eine Batterie **8** als Kurzzeitspeicher,
zwei Brennstoffzellen **14** zur Rückverstromung von Methan,
Mittel zur Zerkleinerung Kohlenstoff-haltigem Abfall und Mittel zur Verdünnung von Kohlenstoff-haltigem Abfall.

Ein bestehendes Wohngebäude **15,** das bereits eine Photovoltaik-Anlage, Wärmepumpen **11** und einen Wärmespeicher **9** umfasst, kann ergänzt werden, um das Hybridkraftwerk zu bauen. Durch die Ergänzung der bestehenden Anlage zur Erzeugung von Strom aus erneuerbaren Energiequellen durch einen Reaktor zur überkritischen hydrothermalen Vergasung von Kohlenstoff-haltigem Abfall unter Sauerstoffausschluss, Elektrolyseur **10,** Energiespeicher, Gasaufbereitungsanlage **4** und Brennstoffzellen **14** kann die autarke Energieversorgung des Wohngebäudes **15** auch in Wind- und Dunkelflauten sichergestellt werden. Das energieautarke Wohngebäude **15** umfasst eine Verbindung zum Erdgasnetz **12** und kann Tankstellen für Wasserstoff-betriebene Fahrzeuge umfassen. Der erzeugte Wasserstoff kann zum Betanken von H₂-beriebenen Fahrzeugen der Bewohner verwendet oder verkauft werden, beispielsweise über H₂-Tankstellen.

In dem Reaktor werden als Edukt Kohlenstoff-haltige Abfälle (=organische Abfälle) der Bewohner des Wohngebäudes **15** eingesetzt. Die organischen Abfälle der Bewohner umfassen beispielsweise Papier, Pappe, Kunststoffe, Lebensmittelreste, Gartenabfälle und andere Abfälle der Biotonne. Jeder Bewohner produziert pro Jahr ca. 300 kg organischen Abfall. Der Kohlenstoff-haltige Abfall wird zerkleinert und mit Wasser verdünnt. Das Hybridkraftwerk umfasst zu diesem Zweck Mittel zur Zerkleinerung Kohlenstoff-haltigen Abfalls und Mittel zur Verdünnung des zerkleinerten Kohlenstoff-haltigen Abfalls. Die zerkleinerten, verdünnten Kohlenstoff-haltigen Abfälle werden in dem Reaktor unter überkritischen hydrothermalen Bedingungen zu Synthesegas umgesetzt. Dabei werden aus dem zerkleinerten, verdünnten Kohlenstoff-haltigen Abfall bei einem Druck von 25 bis 35 MPa und Temperaturen von bis zu 550 Grad Celsius Wertstoffe und Nährstoffe abgetrennt und dann zu Synthesegas umgewandelt, dass in überkritischem Wasser gelöst ist. Das Hybridkraftwerk kann Behälter zur Lagerung der abgetrennten Wert- und Nährstoffe umfassen.

Das Hybridkraftwerk umfasst eine Gasaufbereitungsanlage **4** zur Trennung von Synthesegas, das überwiegend aus CH₄, H₂ und CO₂ besteht, in die einzelnen Bestandteile. Das Hybridkraftwerk umfasst einen Tank als Methanspeicher **7.** Das durch die Gasaufbereitung erzeugte Methan oder das in dem Tank gespeicherte Methan kann bei Bedarf mit der Brennstoffzelle **14** zurückverstromt werden. Das Methan wird in dem Wohngebäude **15** zur Stromversorgung des Wohngebäudes **15,** der Wärmepumpen **11** und des Reaktors verwendet, wenn der durch die Photovoltaik-Anlage erzeugte Strom nicht für die Energieversorgung ausreicht.

Erzeugte Wärme, die nicht unmittelbar benötigt wird, kann in einem Wärmespeicher **9** gespeichert und bei Bedarf für die Energieversorgung insbesondere Heizung und / oder Warmwasserversorgung des Wohngebäudes **15** verwendet werden. Die erzeugte Abwärme aller Prozesse kann ebenfalls im Wärmespeicher **9** gespeichert und zur Wärmeversorgung des Wohngebäudes **15** genutzt werden. Das Hybridkraftwerk umfasst zu diesem Zweck einen Wärmespeicher **9** und eine elektrisch betrieben Wärmepumpe **11.**

Die Energieversorgung der energieautarken Einheit inkl. des Wohngebäudes **15** ist CO₂-neutral. Die Energiekosten sind stabil. Die Entsorgungskosten für Kohlenstoff-haltige Abfälle entfallen.

Überschüssiger Strom aus der Photovoltaik-Anlage wird zum Betrieb Reaktors verwendet. Darüber hinaus erzeugter Strom der Photovoltaik-Anlage wird zum Betrieb des Elektrolyseurs **10** verwendet. Das Hybridkraftwerk umfasst zu diesem Zweck einen Elektrolyseur **10,** der mit Strom aus erneuerbarer Energie betrieben wird und der überschüssigen Strom in Wasserstoff umwandelt. Die Steuerung der Energieerzeugung, die Umwandlung von einem Energieträger in einen anderen Energieträger mit PtX Vorrichtungen, die Speicherung von Energieträgern, die Gasaufbereitung und die Rückverstromung können über ein Energiemanagementsystem basierend auf Verbrauchsdaten gesteuert werden.

In einer bevorzugten Ausführungsform sind Wohngebäude **15,** Photovoltaik-Anlage, Reaktor, Gasaufbereitungsanlage **4,** Elektrolyseur **10,** Brennstoffzelle **14,** Methanspeicher **7,** Wasserstoffspeicher **6,** Wärmepumpe **11** und Wärmespeicher **9** in der energieautarken Einheit wie in Fig. 2 dargestellt, angeordnet und miteinander verbunden.

In einer bevorzugten Ausführungsform umfasst das Hybridkraftwerk einen ersten Container, wobei der erste Container Elektrolyseur **10,** Brennstoffzelle **14** und Wasserstoffspeicher **6** umfasst. Beispielsweise hat der erste Container die Maße 12 m x 2,5 m x 3 m. Vorzugsweise umfasst das Hybridkraftwerk einen zweiten Container, wobei der zweite Container Reaktor und Gasaufbereitungsanlage **4** umfasst. Beispielsweise hat der zweite Container die Maße 12 m x 2,5 m x 3 m. Beispielsweise weise ist der Methanspeicher **7** im Hybridkraftwerk ein Tank mit den Maßen 2,8 m (Durchmesser) x 21 m (Länge). Beispielsweise weise ist der Wärmespeicher **9** im Hybridkraftwerk ein Tank mit den Maßen 2,8 m (Durchmesser) x 21 m (Länge). In einer bevorzugten Ausführungsform umfasst das Hybridkraftwerk einen zweiten Tank als Wärmespeicher **9** mit den Maßen 2,8 m (Durchmesser) x 21 m (Länge). In einer bevorzugten Ausführungsform umfasst die energieautarke Einheit einen Behälter für die Vorhaltung von organischem Abfall.

**Bezugszeichenliste**

| Begriff | Bezugszeichen |
|---|---|
| Anlage zur Erzeugung von Strom aus Solarenergie | 1 |
| Anlage zur Erzeugung von Strom aus Windenergie | 2 |
| Power-to-X Vorrichtung zur thermochemischen Umwandlung von Biomasse und Strom aus erneuerbarer Energiequelle in andere Energieträger | 3 |
| Gasaufbereitungsanlage | 4 |
| Anlage zur Methanisierung | 5 |
| H₂-Speicher | 6 |
| CH₄-Speicher | 7 |
| Batterie | 8 |
| Wärmespeicher | 9 |
| Elektrolyseur | 10 |
| Wärmepumpe | 11 |
| Erdgasnetz | 12 |
| Gasturbine | 13 |
| Brennstoffzelle | 14 |
| Wohngebäude | 15 |
| Bergwerk | 16 |
| Leitung für Strom | 17 |
| Leitung für Synthesegas | 18 |
| Leitung für CH₄ | 19 |
| Leitung für H₂ | 20 |
| Leitung für CO₂ | 21 |
| Leitung für Wärme | 22 |
| Leitung für Biomasse | 23 |
| Behälter für die Lagerung von Biomasse | 24 |
| Trailer Abfüllstation | 25 |
| Betriebstank | 26 |
| Öffentlicher Tank | 27 |

## Patentansprüche

1. Hybridkraftwerk zur autarken Energieversorgung einer geographischen Einheit umfassend eine Anlage zur Erzeugung von Strom aus erneuerbarer Energiequelle,
eine Power-to-X Vorrichtung zur thermochemischen Umwandlung von Biomasse in andere Energieträger **(3),**
einen oder mehrere Energiespeicher.

2. Hybridkraftwerk nach Anspruch 1 wobei die Power-to-X Vorrichtung zur thermochemischen Umwandlung von Biomasse in andere Energieträger **(3)** ausgewählt ist aus Vorrichtung zur Verbrennung von Biomasse, Vorrichtung zur Pyrolyse von Biomasse, Biogasanlage, Vorrichtungen zur hydrothermalen Umwandlung von Biomasse, Vorrichtungen zur hydrothermalen Carbonisierung von Biomasse, Vorrichtungen zur hydrothermalen Verflüssigung von Biomasse, Vorrichtungen zur hydrothermalen Vergasung von Biomasse, Vorrichtungen zur unterkritischen hydrothermalen Vergasung von Biomasse, Vorrichtungen zur nahkritischen hydrothermalen Vergasung von Biomasse, Vorrichtungen zur überkritischen hydrothermalen Vergasung von Biomasse, Vorrichtungen zur überkritischen hydrothermalen Vergasung von Biomasse unter Sauerstoffausschluss.

3. Hybridkraftwerk nach einem der vorgehenden Ansprüche umfassend eine Gasaufbereitungsanlage **(4)** und ggf. eine Anlage zur Methanisierung **(5).**

4. Hybridkraftwerk nach einem der vorgehenden Ansprüche umfassend drei unterschiedliche Energiespeicher, nämlich einen Speicher für Strom als Kurzzeitspeicher, einen H₂-Speicher **(6)** als Mittelzeitspeicher und einen CH₄-Speicher **(7)** als Langzeitspeicher.

5. Hybridkraftwerk nach einem der vorgehenden Ansprüche, wobei die Power-to-X Vorrichtung zur thermochemischen Umwandlung von Biomasse in andere Energieträger **3** eine Power-to-Gas Vorrichtung ist, wobei die Power-to-Gas Vorrichtung ein Reaktor zur überkritischen hydrothermalen Vergasung von auf 25 bis 35 MPa komprimierter Biomasse in überkritischem Wasser unter Sauerstoffausschluss ist,
und wobei der Reaktor eine druckdicht abschließbare innere Hülle umfasst,
der Reaktor in der inneren Hülle einen Abscheidebereich umfasst, der einen Wärmetauscher und einen Abscheider umfasst, zur Erwärmung von komprimierter Biomasse auf bis zu 550 Grad Celsius und zur Abtrennung von Wertstoffen aus der komprimierten Biomasse,
der Reaktor in der inneren Hülle einen Aufheizbereich umfasst zur Erwärmung von komprimierter Biomasse nach der Abtrennung von Wertstoffen auf 600 bis 700 Grad Celsius,
der Reaktor in der inneren Hülle einen Verweilbereich umfasst zur überkritischen hydrothermalen Vergasung von komprimierter Biomasse nach dem Aufheizen auf 600 bis 700 Grad Celsius und
wobei das Hybridkraftwerk ggf. Mittel zur Zerkleinerung und / oder Mittel zur Verdünnung der Biomasse umfasst.

6. Hybridkraftwerk nach einem der vorgehenden Ansprüche umfassend eine oder mehrere weitere Power-to-X Vorrichtungen.

7. Hybridkraftwerk nach Anspruch 6 umfassend einen Elektrolyseur **(10)** zur Umwandlung Wasser und Strom aus erneuerbarer Energiequelle in Wasserstoff.

8. Hybridkraftwerk nach einem der Ansprüche 6 bis 7 umfassend eine Wärmepumpe **(11).**

9. Hybridkraftwerk nach einem der vorgehenden Ansprüche umfassend eine Verbindung zum Erdgasnetz **(12)** zur Einspeisung von CH₄ in das Erdgasnetz **(12).**

10. Hybridkraftwerk nach einem der vorgehenden Ansprüche umfassend eine weitere Anlage zur Erzeugung von Strom aus erneuerbarer Energiequelle, wobei eine Anlage zur Erzeugung von Strom aus erneuerbarer Energiequelle eine Anlage zur Erzeugung von Strom aus Solarenergie **(1)** ist und die weitere Anlage zur Erzeugung von Strom aus erneuerbarer Energiequelle eine Anlage zur Erzeugung von Strom aus Windenergie **(2)** ist.

11. Hybridkraftwerk nach einem der vorgehenden Ansprüche wobei die geographische Einheit ein Gebäude oder mehrere Gebäude und ggf. weitere Energieverbraucher umfasst und wobei die Gebäude unabhängig voneinander ausgewählt werden aus Wohngebäude **(15),** Haus, Einfamilienhaus, Mehrfamilienhaus, Geschäft, Einkaufszentrum, Sportstätte, Sportstadium, Beherbergungsgebäude wie Hotel, Ferienanlage, Campingplatz, Gastronomiebetrieb wie Restaurant, Freizeitpark, Verwaltungsgebäude, Industrieanlage, Werkstatt, Fabrikgebäude, Bürogebäude, Lagerhalle, Handwerksbetrieb, Produktionsstätte, Bergwerk **(16),** landwirtschaftlicher Betrieb wie Stallung, Gewächshaus, Gesundheitsbauwerk wie Krankenhaus, Verkehrsbetrieb wie Flughafen, Seehafen, Bahnhof.

12. Hybridkraftwerk nach einem der vorgehenden Ansprüche wobei die geographische Einheit ausgewählt ist aus einer Straße mit den anliegenden Gebäuden und ggf. vorhandenen weiteren Energieverbrauchern, mehreren Straßen mit den anliegenden Gebäuden und ggf. vorhandenen weiteren Energieverbrauchern, Teil einer Ortschaft oder eines Kantons, Ortschaft, Kanton, Stadtteil, Stadt, Region, Bundesland.

13. Energieautarke Einheit umfassend ein Hybridkraftwerk nach einem der Ansprüche 1 bis 12 und eine geographische Einheit.

14. Energieautarke Einheit nach Anspruch 13 umfassend ein oder mehrere Wasserstoff-Tankstellen.

15. Energieautarke Einheit nach einem der Ansprüche 13 bis 14 umfassend eine Verbindung zum Erdgasnetz **(12).**

16. Energieautarke Einheit nach einem der Ansprüche 13 bis 15 umfassend eine Kopplung mit einer oder mehreren weiteren energieautarken Einheiten zum Austausch von Energieträgern, wobei jede weitere energieautarke Einheit eine energieautarke Einheit nach einem der Ansprüche 13 bis 15 ist.
